# EUROPEAN PATENT SPECIFICATION

(11) **EP 2 280 055 B1**
(45) Date of publication and mention of the grant of the patent: **17.04.2013**
(21) Application number: 10181348.3
(22) Date of filing: 16.10.2001
(51) Int. Cl.: C09K 21/14, A62D 1/00, C23F 11/00

(54) **Fire retardant compositions with reduced aluminum corrosivity**
Flammenhemmende Zusammensetzungen mit verminderter Aluminiumkorrosivität
Compositions ignifuges avec corrosivite pour l'aluminium reduite

(30) Priority: 28.11.2000 US 723567; 16.10.2001 US 978602
(43) Date of publication of application: 02.02.2011
(62) Divisional of application: 01998612.4
(73) Proprietor: ICL Performance Products LP, St. Louis, MO 63141-1160 (US)
(72) Inventor: Vandersall, Howard L., Upland, CA 91784-1258 (US)
(74) Representative: Gill, Stephen Charles

(56) References cited:
- GB-A- 2 013 168
- US-A- 4 822 524

## Description

### FIELD OF THE INVENTION

The present invention relates to corrosion-inhibited fire retardant compositions. More specifically, the invention is directed to ammonium polyphosphate concentrates and other solutions containing suspended and/or soluble iron compounds and at least one biopolymer.

### BACKGROUND

Aerial application of fire-retardant compositions to combat the spread of wildland fires is common. The composition of fire retardants concentrates designed for managing and controlling wildland fires are of two generally types, those which, when mixed or diluted with water to end-use concentration, result in either a gum thickened solution, and those which do not contain a gum thickener and, consequently, result in water-like solutions, which are not rheologically modified. These water-like retardant solutions exhibit inferior drop characteristics. The former may be supplied as dry powders or as suspensions or slurries generally referred to as fluids. Those concentrates that result in water-like solutions when diluted with water may contain suspended components, as well, but are generally referred to as liquid concentrates. Fire retardant concentrates that are supplied as fluids or liquids are preferred by some because they can be simply and easily diluted to end-use strength with little mixing hardware and manpower.

Ammonium polyphosphate liquids have been used as aerially applied fire-retardants. These liquids have certain advantages in comparison to other fire-suppressing compositions since they can be transported and stored prior to use in the liquid form rather than being mixed from dry ingredients. However, concentrated liquid fire retardants and solutions prepared therefrom are extremely corrosive to aluminum and brass and mildly corrosive to other materials of construction used in handling, storage and application equipment. As used herein, all metals include alloys thereof. Accordingly, aluminum includes aluminum 2024T3, 6061 and 7074, steel includes 1010 and 4130 steel and brass includes yellow and naval brass. Since wildland fire retardants are most frequently transported to the fire and applied aerially, it is imperative that corrosive damage to the materials of construction of fixed-wing aircraft and helicopters be minimized.

Accordingly, the United States Department of Agriculture ("USDA") Forest Service has established, in "Specification 5100-304b (January 2000) Superseding Specification 5100-00304a (February 1986)," entitled "Specification for Long Term Retardant, Wildland Fire, Aircraft or Ground Application (hereinafter, "Forest Service Specifications"), maximum allowable corrosion rates for 2024T3 aluminum, 4130 steel, yellow brass and Az-31-B magnesium. For example, the corrosivity of forest fire retardants, in concentrate, to aluminum, steel and yellow brass must not exceed 0.127 mm (millimeters) (5.0 milli-inches ("mils") per year as determined by the "Uniform Corrosion" test set forth in Section 4.3.5.1 of the aforementioned USDA, Forest Service Specifications. If the product is applied from fixed-tank equipped helicopters, the corrosivity of the fire retardants to magnesium must not exceed 0.127 mm (5.0 mils) per year. The Forest Service Specifications identify the maximum amount of corrosion acceptable when both the retardant concentrate and its diluted solutions are exposed to each metal indicated above at temperatures of 21°C. (70° Fahrenheit ("F")) and 49°C (120°F) in both totally and partially immersed configurations. The maximum allowable corrosivity of aerially applied fire retardant diluted solutions to aluminum is 0.0508 mm per year (2.0 mils per year ("mpy")), and the maximum corrosivity to brass and steel is 0.127 mm per year when partially immersed, and 0.0508 mm per year (2.0 mpy) when tested in the partially immersed condition. In the partially immersed configuration, one-half of the coupon is within the solution and one-half is exposed to the vapors in the air space over the solution.

In an effort to address the corrosivity problems encountered with the use of fertilizer grade ammonium polyphosphate, sodium ferrocyanide was incorporated into the corrosive compositions. Sodium ferrocyanide has proven to be an effective corrosion inhibitor in fire retardant compositions containing ammonium polyphosphate fertilizer solutions. However, while sodium ferrocyanide is effective as a corrosion inhibitor, several disadvantages of its use make its incorporation in wildland fire retardant compositions undesirable. Specifically, the environmental and toxicological safety of ferro(i)eyanides is, at best, questionable. When exposed to acidic conditions and/or ultraviolet radiation from natural sunlight, the ferro(i)cyanide radical readily degrades releasing free iron and cyanide and/or hydrogen cyanide, which are toxic to humans, animals and aquatic life. Further, free iron emanating either from decomposition of a portion of the ferro(i)cyanide radical, or introduced from other components or impurities within the composition, will subsequently react with remaining non-decomposed ferro(i)cyanide to form ferrous ferricyanide ("Turnbull's Blue") or ferric ferrocyanide ("Prussian Blue"), which emit a persistent blue-black or indigo-blue coloration, staining all that they contact. Consequently, neither ferricyanide nor ferrocyanide can be used in fire-retardants that are expected to fade and become non-visible over time, for example, in fugitive retardant compositions.

The magnitude of the above concerns is increased since wildland fire retardants are generally applied aerially in a less than completely controlled manner. Due to the presence of variables such as vegetative cover, smoke, or wind drift that impact the trajectory of the free-falling solution, aerially applied wildland fire retardant solutions may land on or near people, animals and in bodies of water, or on soil where it could enter the water supply.

In addition, the rheological properties of wildland fire retardant solutions during periods of extreme and relaxed shear, and its elasticity are recognized as important properties. The rheological properties of forest and brush land fire retardant solutions are important because they significantly affect the performance of the retardant during and following aerial discharge and subsequent distribution within the fuel ladder. The degree of dispersion, integrity of the retardant cloud, magnitude of wind-induced drift, as well as the continuity of coverage, retention on and penetration of the fuel complex are among those performance-related characteristics impacted. Fire retardant solutions, which exhibit increased viscosity and elastic properties, are more desired because they are less affected by the extreme forces encountered in aerial application, e.g. wind effects, gravity, and shear force due to forward momentum

Historically, wildland fire retardant solutions, as prepared for application, have been of three general rheological types: (1) unthickened liquid fertilizer solutions with little effective viscosity and elasticity, (2) clay thickened aqueous ammonium sulfate solutions with high apparent viscosity, but little effective viscosity and no elasticity; and (3) high viscosity, pseudoplastic and elastic, gum thickened ammonium phosphate and/or sulfate solutions, which maintain an increased viscosity level and elastic character even when subjected to great amounts of shear.

United States Paten Publication No. US 4,822,524 describes a fire-retardant composition for application to vegetation to suppress the spread of wildfire, consisting essentially of ammonium polyphosphate and a xantham gum, in a minor amount effective to improve long term stability, adhesion characteristics and/or a reduced tendency to corrode mild steel.

Guar gums, natural polysaccharides that are extracted from the guar bean, have been used in aerially applied fire retardant to enhance the rheological properties of the retardant solutions. Guar gum thickeners function in an acceptable manner when the ammonium polyphosphate based fire retardant composition is diluted relatively soon after preparation. The rate of degradation of the guar gum thickener varies with the composition of the fertilizer grade ammonium polyphosphate and can be as short as a few hours to one week. However, when the concentrated retardant is stored for more than about one week, the rate of viscosity decreases to an unacceptable level. For example, experiments have shown that a fire retardant concentrate stored for one month prior to dilution shows little tendency to increase in viscosity for several hours and does not reach its expected viscosity level for perhaps a week. Since wildland fires occur on a non-predictable basis and a rapid response is required to treat them, this type of behavior is unacceptable.

Conventional xanthan biopolymers thickeners having particle sizes in excess of about 100 microns have also been used to alter the rheological characteristics of aerially applied fire retardants. Conventional commercially available xanthan biopolymers include but are not limited to Kelzan^{®} and Kelzan S^{®} from CP Kelco, Wilmington, DE, and Xanthan AC^{®} from Jungbunzlauer International AG, Basel, Switzerland. However, like guar gums, conventional xanthan biopolymer thickeners perform unacceptably in liquid ammonium polyphosphate compositions. Even when prepared freshly, ammonium polyphosphate fire retardant concentrates containing these conventional xanthan biopolymers have a decreased ability to increase the viscosity of the solution in a timely manner, upon subsequent dilution with water. As such, the use of conventional xanthan biopolymer thickeners, to improve the rheological characteristics of ammonium polyphosphate based fire retardant compositions for aerially application is less desired.

Accordingly, there is a need to provide safe and acceptable wildland fire retardants for the suppression or management of wildland fires that are not corrosive to the equipment associated with the transportation, handling and application of the retardant, have favorable rheological and aerial application characteristics and are environmentally and toxicologically friendly, thereby avoiding the above disadvantages.

### SUMMARY OF THE INVENTION

In overcoming the above disadvantages, it is an object of the invention to produce a wildland fire retardant composition that has a reduced-tendency to corrode various metals, favorable rheological and aerial application characteristics, and is not negatively affected by exposure to sunlight or acidic conditions, resulting in the release of toxic by-products that could be both environmentally and toxicologically hazardous.

It is a further object of the invention to provide a fire retardant composition that is compatible with the concept of a fugitive or fading color system, able to become invisible over time with exposure to natural sunlight.

The above and other objects are met by the present invention, which provides a corrosion-inhibited fire retardant composition according to claim 1.

In a second aspect, the present invention provides a method of preparing a corrosion-inhibited fire retardant composition according to claim 9.

In yet a third aspect, the present invention provides a method of suppressing wildland fires according to claim 10.

### BRIEF DESCRIPTION OF THE DRAWINGS

Not applicable.

### DESCRIPTION OF THE INVENTION

In accordance with the present invention, it has been discovered that a fire-retardant composition can be prepared that has a reduced tendency to corrode various metals, including aluminum, that is superior to known fire retardants in rheological aerial application characteristics and is toxicologically and environmentally safe. The corrosion-inhibited fire retardants of the invention include at least one fire retardant composition comprised of at least one ammonium polyphosphate and a corrosion inhibiting system comprised of at least one corrosion inhibiting compound selected from a group of corrosion inhibiting compounds consisting of azoles, insoluble ferric pyrophosphate, soluble ferric pyrophosphate, ferrous oxalate, ferric citrate, ferrous sulfate, ferric ammonium citrate, insoluble ferric orthophosphate, soluble ferric orthophosphate, ferric ammonium oxalate, ferric ammonium sulfate, ferric bromide, ferric sodium oxalate, ferric stearate, ferric sulfate, ferrous acetate, ferrous ammonium sulfate, ferrous bromide, ferrous gluconate, ferrous iodide, ferric acetate, ferric fluoroborate, ferric hydroxide, insoluble ferric oleate, ferrous fumarate, ferrous oxide, ferric lactate, ferric resinate, and any combination thereof. Generally, the corrosion inhibiting system is present in a minor amount effective to substantially reduce the corrosiveness of the fire retardant composition.

In one embodiment of the invention, a small amount of at least one biopolymer is added to the fire retardant compositions of the invention. When small amounts of biopolymers are added to the fire retardant compositions of the invention, further reduction in aluminum corrosivity is experienced. As shown in Tables 7a and 7b below, the corrosion-inhibited fire retardant compositions of the invention containing biopolymers pass the corrosion requirements in both concentrate and diluted solutions. Generally, the fire retardant compositions of the invention, in concentrate, comprise in the range of about .01% to about 5.0% biopolymer. However, as one skilled in the art will appreciate, compositions comprising biopolymer concentrations outside of this range are also effective. Further, biopolymers having particle diameters outside of the above range may be incorporated into the compositions of the invention without departing from the spirit and scope of the invention. For example, fire retardant compositions containing biopolymers having particle sizes greater than about 100 microns in combination with biopolymers having particle sizes less than about 100 microns would be obvious to one skilled in the art.

In one specific embodiment of the invention, the concentrated fire retardant composition comprises about 1.0% biopolymer. In another specific embodiment of the invention, the concentrated fire retardant composition comprises about 3.0% biopolymer.

The biopolymer has a particle size less than about 100 microns. Biopolymers suitable for use in the present invention include, xanthan biopolymer having an average particle diameter less than about 100 microns. Conventional xanthan thickeners having average particle diameters in excess of about 100 microns perform unacceptably in contact with liquid ammonium polyphosphate compositions. However, the inventors have found that reducing the particle diameter of biopolymers improves the ability of the biopolymers to rapidly increase the viscosity of the fire retardant composition upon subsequent dilution with water and exhibit increased corrosion inhibition, generally.

For example, a xanthan gum, with a west average particle diameter in the range of about 100 to about 180 microns perform unacceptably in the fire retardant composition of the present invention, while a chemically identical xanthan gum with an average particle diameter in the range of about 20 to about 70 microns performs acceptably.

The corrosion-inhibited fire retardant compositions of the invention include at least one xanthan biopolymer having an average particle diameter less than about 100 microns. Unlike prior art fire retardant compositions comprising guar gum thickeners and conventional xanthan biopolymers having average particle diameters greater than about 100 microns, the rate of viscosity of the fire retardant compositions of the invention that include xanthan biopolymer show viscosity development that is unaffected by the length of time that the biopolymer is in contact with the ammonium polyphosphate fire retardant solution. Some xanthan biopolymers suitable for use in the present invention are found in Xanthan Gum-natural biopolymer for scientific water control, Fifth Edition.

The corrosion-inhibited fire retardant compositions of the invention, specially adapted for aerial application to wildland fires, are prepared by forming an intermediate concentrate composition comprising the above-described fire retardant composition containing the above-described corrosion inhibiting system. The intermediate concentrate is then diluted with water to form the corrosion-inhibited fire retardant composition of the invention. Generally, the corrosion inhibiting system is present in the corrosion-inhibited fire retardant of the invention in a minor amount effective to substantially reduce the corrosiveness of the fire retardant composition.

In accordance with the present invention, the corrosion-inhibited fire retardants of the invention include a fire retardant comprised of at least one ammonium polyphosphate. Ammonium polyphosphate is also referred to as polyammonium phosphate and may include both ortho- and polyphosphate, other ammonium phosphates such as pyro- and metaphosphates, the alkali metal equivalents thereof, as well as a blend of phosphate polymers.

The ammonium polyphosphate solutions that are used as agricultural fertilizer and wildland (vegetative) fire retardants are manufactured by neutralizing aqueous solutions of wet-process phosphoric acid, generally containing about 68% to about 74% phosphorus pentoxide with anhydrous ammonia in such a manner that both high temperature and pressure are experienced. When prepared in this manner, a portion of the impure orthophosphoric acid polymerizes or condenses, resulting in the formation of pyrophosphate, short chain polyphosphates and, in most instances, small amounts of cyclic or metaphosphates. That portion of the acid that does not polymerize, of course, remains as orthophosphoric acid. Ammoniation of this mixture of phosphate species occurs within the reactor, as well, resulting in an aqueous solution containing ammonium ortho, pyro, tripoly, tetrapoly and some higher chain and cyclic phosphate species. These condensed phosphates generally exhibit increased water solubility as compared to orthophosphates and, consequently, more highly concentrated solutions can be prepared when they are present. The relative concentrations of the various species depends primarily on the temperature and pressure achieved within the reactor. Commercial solutions generally contain from about 34% to about 37% phosphorus pentoxide. Phosphorus pentoxide concentrations above about 37% approach water solubility limits resulting in solutions that are not stable, from which solids may precipitate during ambient temperature storage. Solutions of this type are generally referred to as either 10-34-0 or 11-37-0 liquid concentrates; the numerical designation refers to the percentage of their plant nutrient composition, i.e., ammoniacal nitrogen, phosphorus pentoxide and potassium oxide.

It should be noted that the condensed phosphates that are present in liquid concentrate solutions are subject to hydrolyses, which results in depolymerization. The rate of hydrolytic degradation increases with time, temperature, and the relative acidity of the solution. Therefore, ammonium polyphosphate concentrates and their solutions may vary in species composition as received, and as time progresses during their subsequent storage.

These liquid concentrates may additionally contain small amounts of diammonium sulfate and a host of metal and alkali-metal impurities. The quantity and quality of these impurities vary with the composition of the phosphate ore, the utilized process and the extent of purification that is conducted during manufacture of the wet-process phosphoric acid. Since these solutions are manufactured primarily as nutrients, the quality control parameters of greatest interest are the percentages of their contained nutrients - nitrogen and phosphorus - and the clarity, stability and color of the solution rather than purity per se.

The corrosion inhibiting system of the invention is comprised of at least one corrosion inhibiting compound selected from a group of corrosion inhibiting compounds consisting of azoles, insoluble ferric pyrophosphate, soluble ferric pyrophosphate, ferrous oxalate, ferric citrate, ferrous sulfate, ferric ammonium citrate, insoluble ferric orthophosphate, soluble ferric orthophosphate, ferric ammonium oxalate, ferric ammonium sulfate, ferric bromide, ferric sodium oxalate, ferric stearate, ferric sulfate, ferrous acetate, ferrous ammonium sulfate, ferrous bromide, ferrous gluconate, ferrous iodide, ferric acetate, ferric fluoroborate, ferric hydroxide, ferric oleate, ferrous fumarate, ferrous oxalate, ferrous oxide, ferric lactate, ferric resinate, and any combination thereof. In one preferred embodiment, the corrosion inhibiting system is comprised of at least one soluble corrosion inhibiting compound and at least one insoluble corrosion inhibiting compound. The combination of such soluble and insoluble corrosion inhibiting iron containing compounds appears to provide the optimum combination of corrosion inhibition.

A minor amount of the corrosion inhibiting system of the invention effective to substantially reduce the corrosiveness of the fire retardant composition is included in the corrosion-inhibited fire retardant compositions of the invention. A minor effective amount of the corrosion inhibiting system is that amount, which substantially reduces the corrosivity of the fire retardant. As is understood by one of ordinary skill in the art, what constitutes a substantial reduction in corrosivity is largely dependent on the specific fire retardant used in the fire retardant composition of the invention, as well as the specific composition of the corrosion inhibiting system, and can be readily determined by one of skill in the art without undue experimentation.

In one embodiment, the corrosion inhibiting system of the invention is present in a minor amount effective in the corrosion-inhibited fire retardant composition, in concentrate, to obtain a retardant having at least one of a maximum corrosivity to aluminum of 0.127 mm per year (5.0 mpy) yellow brass of 0.127 mm per year (5.0 mpy), and steel of 0.127 mm per year (5.0 mpy) as determined by the "Uniform Corrosion Test" set forth in Section 4.5.6.1.2 of "Specification 5100-304b (January 2000) Superseding Specification 5100-304a (February 1986)," entitled "Specification For Long Term Retardant, Wildland Fire, Aircraft or Ground Application," issued by the USDA.

In a specific embodiment, the corrosion inhibiting system of the invention comprises in the range of about .01% to about 10.0% of the total corrosion-inhibited fire retardant. In another specific embodiment, the corrosion inhibiting system of the invention comprises in the range of about 0.3% to about 6.0% of the total corrosion-inhibited fire retardant. In yet another specific embodiment, the corrosion inhibiting system of the invention comprises in the range of about 0.6% to about 5.0% of the total corrosion-inhibited fire retardant.

Prior to use, and in one embodiment of the invention, the corrosion-inhibited compositions of the invention are blended with water to form dilute solutions containing the amount of phosphorus pentoxide required to achieve the maximum amount of vegetation coverage at an application rate sufficient to reduce the flammability of the vegetative fuels to the desired level. The water used in the composition of the invention may be tap water, or water from other convenient water sources. Generally, the compositions are diluted one part concentrate to in the range of about three to seven parts water. In a specific embodiment, the compositions of the invention are diluted one part concentrate to in the range of about four to six parts water. However, it should be noted that the compositions of the invention may be diluted outside of the above ranges, for example where improved retardant penetration is desired. In a specific embodiment, the fire retardant compositions of the invention comprise less than about 1.18% biopolymer in dilute solution.

In a specific embodiment, the compositions of the invention are blended with water to form dilute solutions containing the amount of phosphorus pentoxide required to meet USDA, Forest Service Specification fire-retardant effectiveness requirements. This concentration, which is determined via combustion-retarding effectiveness testing described in USDA, Forest Service Specification 5100-304b, "4.5.2. Combustion Retarding Effectiveness Test," will generally depend on the percentage of phosphorus pentoxide present in the concentrated composition, and the extent of its availability for retarding reactions. The corrosion-inhibited fire retardant composition of the invention is typically diluted to an amount effective to achieve maximum coverage of vegetation at an application rate sufficient to reduce the flammable fuels to a desired level. The minimum USDA, Forest Service Specifications, for combustion retarding effectiveness, as specified in Specification 5100-304b, is generally obtained when the corrosion-inhibited fire retardant concentrate of the invention is diluted with about 1 to about 8 volumes of water.

To suppress wildland fires, the corrosion-inhibited fire retardant compositions of the invention are diluted with water and applied on threatened vegetation, ahead of approaching wildland fire. Ammonia from both the ammonium phosphate and the ammonium sulfate are liberated at temperatures below the ignition temperature of the fuel. The phosphoric and sulfuric acids are both initially effective fire retarding acids. The phosphoric acid will retain present and effective with the vegetative fuel until temperatures exceed 600°C. However, the boiling point of sulfuric acid is much lower, and the amount present will decrease as the fuel temperature increases. Thus, at least a portion of the sulfuric acid is lost prior to the ignition temperature of the fuel. The resultant mineral acids subsequently react with the cellulosic components of vegetative fuels on which they are applied. Their thermal decomposition is thereby altered in such a manner that they will no longer serve as fuel. These reactions are described in U.S. Pat. No. 4,839,065 to Vandersall.

The fire retardant compositions of the invention may also contain suspending agents. Suspending agents effectively reduce the rate of separation and settling during long term storage. Thus, as one skilled in the art would appreciate, the amount of suspending agent depends upon its relative effectiveness per unit applied, the desired length of storage and the additional additives incorporated into the compositions of the invention. As used herein, suspending agents useful in the compositions of the invention include colloidal clays, for example, attapulgus, fuller's earth, sepiolite, montmorillonite, and kaolin clays. As used herein, attapulgus clay includes, but is not limited to attapulgite and polygorskite. As used herein, kaolin clay includes, but is not limited to Kaolinite, [Al₂Si₂O₇-2(H₂O)] and [Al₂O₃-2SiO₂-2(H₂O)].

As will be apparent to those skilled in the art, the corrosion-inhibited fire retardant of the invention may contain or be mixed with other functional components or additives such as suspending agents, coloring agents, surfactants, stabilizers, opacifying agents, other corrosion inhibitors, any combination thereof, or with other functional components.

For example, and in one embodiment of the invention, the corrosion-inhibited fire retardant composition of the invention includes at least one highly colored pigment. The colored pigment is incorporated to assist in the visual identification of treated and untreated vegetation. Suitable highly colored pigments include iron oxide, which produces many colors like brown and red, titanium dioxide pigments, which produce a white color, or an ultra-violet sensitive dye dispersed in biodegradable plastic. However, for certain uses, like along roadsides or in parks, it may be desirable to exclude any colorant from the mixture. Accordingly, as one skilled in the art would appreciate, the amount of colorant or pigment incorporated into the compositions of the invention depends on the degree of the dilution and visibility contemplated by the user. Visibility is usually obtained with red iron oxide when it is present in the diluted solution in the range of about 0.15% to about 0.4%, depending on the colorant characteristics and on the vegetative and topographical characteristics of that on which it will be applied. The amount incorporated in the concentrate will, of course, vary with the dilution rate required to provide adequate fire retarding effectiveness.

In another embodiment, the present invention includes at least one of red iron oxide or brown iron oxide, or a combination thereof. In yet another embodiment, the present invention includes a fugitive coloring agent, whose color fades upon exposure to the elements. In a further embodiment, the present invention includes opacifying pigments, which are generally not highly colored, but have the ability to cover and hide that on which it is deposited so that the highly colored pigment becomes more visible.

Surfactants may also be added to increase visibility, through the generation of a foam, and to improve penetration of the retardant solution into porous fuels. Accordingly, as one skilled in the art would appreciate, the amount and type of surfactant incorporated into the compositions of the invention depends on the degree of the dilution and visibility contemplated by the user.

Thickeners, for example, hydroxypropyl guar, may also optionally be added to the compositions of the invention. The existence of such gums in the compositions of the invention is not necessary for anti-corrosive or improved rheological characteristics to be realized. If employed, the quantity of other gums in the compositions of the invention will vary depending in part on the nature and concentration of the fire-retardant salts present, the presence of impurities, and the presence of other components. Accordingly, and in one embodiment of the invention, the compositions of the invention contain thickeners, for example, hydroxypropyl guar, or other non-ether derivative guar thickeners. In other embodiments of the invention, the compositions do not contain thickeners, for example, hydroxypropyl guar.

It has been discovered that azoles are effective corrosion inhibitors for brass. In one embodiment of the invention, the compositions of the invention comprise at least one azole. As used herein, an azole is any of a group of chemical compounds with a five-membered ring containing one or more nitrogen atoms. Azoles suitable for use in the corrosion-inhibited fire retardants of the invention include, but are not limited to tolytriazole, benzotriazole, mercaptobenzothiazole, dimercaptothiadiazole, 1,2 benzisothiazoline-3-1, 2-benzimidazolone, 4,5,6,7-tetrahydrobenzotriazole, tolylimidazole, 2-(5-ethyl-2-pyridyl) benzimidazole, phthalimide, any alkali metal salts thereof and combinations thereof. The amount of azole or other corrosion inhibitors is dependent upon the corrodible metal for which corrosion resistance is desired, the level of resistance desired, and the specific concentration of the fire retardant composition employed, including corrosion inhibiting compounds contained therein.

However, in one embodiment of the invention, the corrosion-inhibited fire retardant concentrates include at least one azole, present in a minor amount effective to obtain a corrosivity of yellow brass to a maximum of 0.127 mm per year (5.0 mpy) as determined by the "Uniform Corrosion Test" set forth in Section 4.5.6.1 of "Specification 5100-304b (January 2000) Superseding Specification 5100-304a (February 1986)," entitled "Specification For Long Term Retardant, Wildland Fire, Aircraft or Ground Application," issued by the USDA. In a specific embodiment of the invention, the fire retardant concentrates of the invention comprise in the range of about .01% to about 1.0% tolytriazole. In yet another specific embodiment, the compositions of the invention include in the range of about 0.2% to about 0.6% tolytriazole. In yet another specific embodiment, the compositions of the invention include in the range of about 0.3% to about 0.5% tolytriazole.

A method of inhibiting corrosion, using the above-described corrosion inhibiting systems of the invention is also provided. A corrodible material is provided and contacted with an effective amount of the corrosion inhibiting system of the invention to substantially reduce the corrosiveness of the fire retardant.

In one approach the corrodible material is also contacted with at least one above described suspending agents. In another approach, the method of inhibiting corrosion further includes the step of contacting the corrodible material with at least one above-described biopolymer having a particle size less than about 100 microns. Accordingly, the methods includes providing a corrodible material and contacting the corrodible material and at least one above-described biopolymer having a particle size less than about 100 microns and an effective amount of the corrosion inhibited System of the invention.

Any corrodible material may be used according to the method of inhibiting corrosion. In one approach, the corrodible material is selected from a group of corrodible materials consisting of steel, brass, aluminum, and any alloy thereof.

Prior to use, and in one approach, the corrosion inhibiting system and biopolymer, if present, are blended with water prior to or during contact with the corrodible material. The water used in the composition of the invention may be tap water or water from other convenient water sources.

The corrosion inhibiting system of the invention includes at least one additive selected from a group of additives including suspending agents, coloring agents, surfactants, opacifying pigments, stabilizers, corrosion inhibitors and any combination thereof.

While the corrosion-inhibited fire retardant compositions of the invention reduce aluminum corrosivity in the absence of biopolymers, biopolymers are not significantly effective for reducing corrosion to aluminum in the absence of the corrosion inhibiting system of the invention. However, it has been discovered that the corrosion-inhibited fire retardant composition of the invention containing biopolymers shows improved rheological characteristics in the absence of the corrosion-inhibiting system of the invention. Specifically, increased viscosity is shown in dilute solutions comprising the above-described corrosion-inhibited fire retardant composition, in the absence of the corrosion inhibiting system of the invention. Accordingly, fire retardant composition of the invention comprises at least one above-described fire retardant composition comprised of at least one ammonium polyphosphate and at least one above-described biopolymer having a particle diameter of less than about 100 microns. This composition, which does not include the above-described corrosion inhibiting system of the invention; will hereinafter be referred to as the viscosity-increased fire retardant compositions.

While suspending agents may be utilized in all of the fire retardant compositions of the invention, the use of suspending agents is not necessary for improved rheological characteristics to be realized in both the concentrated and dilute fire retardant compositions, or for the corrosion inhibiting characteristics of the corrosion-inhibited fire retardants compositions of the invention to be realized.

The viscosity-increased fire retardant compositions of the invention comprise in the range of about .01% to about 5.0% biopolymer, in concentrate composition. However, as one skilled in the art will appreciate, compositions comprising biopolymer concentrations outside of this range are also effective in increasing the viscosity of fire retardant compositions. In one specific embodiment of the invention, the viscosity-increased fire retardant composition, of the invention; in concentrate, comprises about 1.0% biopolymer. In another specific embodiment of the invention, the fire retardant composition, in concentrate, comprises about 3.0% biopolymer.

The viscosity-increased fire retardant compositions of the invention include at least one above-described xanthan biopolymer. The fire retardant compositions of the invention include at least one fire retardant compositions comprised of at least one ammonium polyphosphate, in the range of about .01% to about 5.0% at least one xanthan biopolymer having a particle size less than about 100 microns, and at least one above-described additive or functional component.

The viscosity-increased fire retardant compositions are prepared in the same manner as the above-described corrosion-inhibited fire retardant composition of the invention. Accordingly, the viscosity-increased fire retardant composinons are prepared by forming an intermediate concentrate composition comprising the above-described fire retardant composition containing at least one ammonium polyphosphate and at least one above-described biopolymer having a particle size less than about 100 microns, and diluting the intermediate concentrate with water to form the visoosity-increased fire retardant composition. approach In one approach the compositions comprise less than about 1.18% biopolymer.

In a specific embodiment the fire retardant compositions of the invention are prepared by forming an intermediate concentrate composition comprised of at least one above-described fire retardant and at least one xanthan biopolymer having an average particle diameter less than about 100 microns, wherein the fire retardant compositions comprise in the range of about .01% to about 5.0% xanthan biopolymer, and diluting the intermediate concentrate with water to form the increased-viscosity fire retardant composition of the invention.

A method of suppressing wildland fires using the viscosity-increased fire retardant compositions of the invention is also provided. The method includes the steps of aerially applying to wildland vegetation a fire suppressing composition comprising water and the above-described viscosity-increased fire retardant composition. In a specific embodiment, the method includes aerially applying to wildland vegetation a fire, suppressing composition comprising water, at least one ammonium polyphosphate composition, less than about 1.18% of at least one xanthan biopolymer having a particle size less than about 100 microns and at least one above-described additive.

The following examples illustrate specific embodiments of the invention without limiting the scope of the invention in any way. In each example, samples of ammonium polyphosphate fire retardant concentrates were mechanically admixed with iron containing compounds, biopolymer, additives, and in some cases, with an azole, as indicated in each table. Any mechanical mixing technique that is well known in the art may be used in the present invention. The concentrated fire retardant solutions are diluted with water, as indicated. The "Requirements" row illustrates the level of aluminum 2024-T3 corrosion allowed by the USDA, Forest Service Specifications 5100-304b, i.e., the maximum allowable corrosivity for product acceptance for use in wildland fire retardant compositions. The resulting samples were tested for corrosivity in accordance with USDA, Forest Service Specifications 5100-304b.

### EXAMPLE 1-THE ALUMINUM CORROSIVITY OF NEAT AMMONIUM POLYPHOSPHATE SOLUTION

Table 1 illustrates the corrosion characteristics of neat, unadulterated fertilizer grade 10-34-0 and 11-37-0 ammonium polyphosphate liquid concentrates obtained from three different sources. All of the samples are either 10-34-0 or 11-37-0, as received, with no additions. The corrosivity of the samples were expressed in millimeters (mm) (mils) of metal loss on exposed metal surface extrapolated from 90 to 365 days (mmpy) (mpy) and ascertained using the aforementioned USDA, Forest Service Specifications for determining corrosivity. Both the concentrated retardant and its diluted solutions were tested at each temperature and condition indicated.

The diluted solutions were prepared by admixing four to five volumes of water with one volume of the concentrated solution. Thus, the diluted solutions were in the range of between about 15% to about 20% by volume of the concentrate.

In accordance with the Forest Service Specifications for corrosion testing of fire retardants, a 25.4 mm (one-inch) wide 101.6 mm (four-inches) long 3.175 mm (one-eighth inch) thick coupon of the aluminum was obtained from a standard source. The coupon is cleaned, dried and weighed according to standard USDA, Forest Service Specifications and suspended in a one quart, straight sided jar filled either 50% (partially) or 100% (totally) full using a piece of nylon string When suspended in a partially full jar, the coupon was 50% (two inches) immersed in the test solution with the other 50% extending up from the solution into the air space above it. When the jar was full with approximately 800 ml of the solution, the metal coupon was totally immersed in the solution. The jars were then closed with a screw cap and two or three identical corrosion jars (cells) of each partially and totally immersed coupons were stored at 21°C (70°F) and 49°C (120°F) for ninety days. At the end of the ninety day storage period, the jars were opened and the coupons were removed and cleaned according to the USDA, Forest Service Specifications. The coupon was then re-weighed after it dried and its weight loss was determined by comparing its initial and final weights. The calculated weight loss and density of the metal coupon were used to extrapolate to millimeters (mils (0.001 inches)) of aluminum that would be lost during a one-year period at the test condition, assuming that the weight loss was experienced uniformly across the coupon surface. The corrosion rate of both the partially and totally immersed coupons were calculated using the total surface area of the coupon. The samples at each condition were then averaged and reported as the corrosion rate. The results are shown in Table 1.

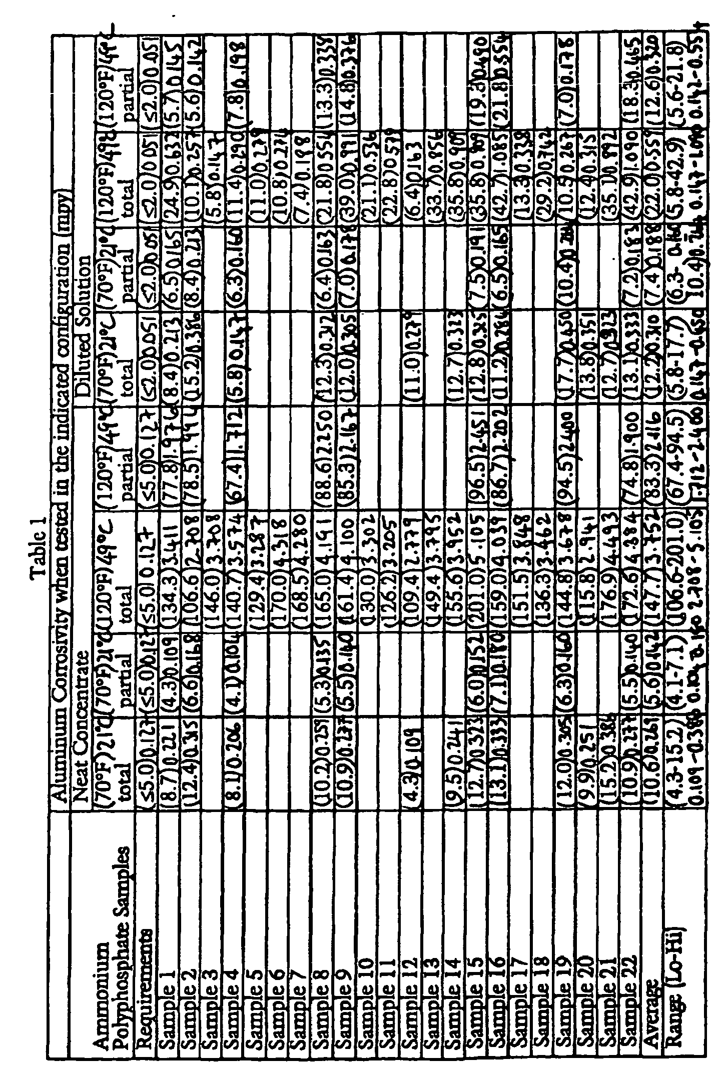

The corrosivity of the ammonium polyphosphate solutions to aluminum 2024T-3 was relatively low when the temperature was maintained at about 21°C (70°F). However, none of the samples of the neat ammonium polyphosphate solutions, met the Forest Service Specifications for corrosivity of fire retardants. In addition, the results showed that increasing the solution temperature to 49°C (120°F) dramatically increased the corrosion of the aluminum coupon by the neat ammonium polyphosphate samples, i.e., in excess of an order of magnitude.

### EXAMPLE 2-THE ALUMINUM CORROSIVITY OF AMMONIUM POLYPHOSPHATE SOLUTION CONTAINING 1.2% IRON OXIDE (Fe₂O₃) & 1.4% ATTAPULGUS CLAY

The corrosion characteristics of neat fertilizer grade ammonium polyphosphate solutions containing additional amounts (<3%) of a mixture of an iron oxide colorant and attapulgus clay is illustrated in Table 2. Each sample was prepared by admixing neat concentrated ammonium polyphosphate obtained from several sources with 1.4% attapulgus clay, and either 1.2% red iron oxide or 1.2% brown iron oxide, as indicated. In addition, 0.3% tolytriazole was also admixed into Samples 11, 15, 16, 18 and 19 and 0.5% tolytriazole was admixed into sample 20. Aliquots from these concentrate samples were then diluted by admixing 1.0 volume of concentrate with 4.25 volumes of tap water. The concentrates and their solutions were then tested for corrosivity and diluted in accordance with Forest Service Specifications. The results are shown in Table 2.

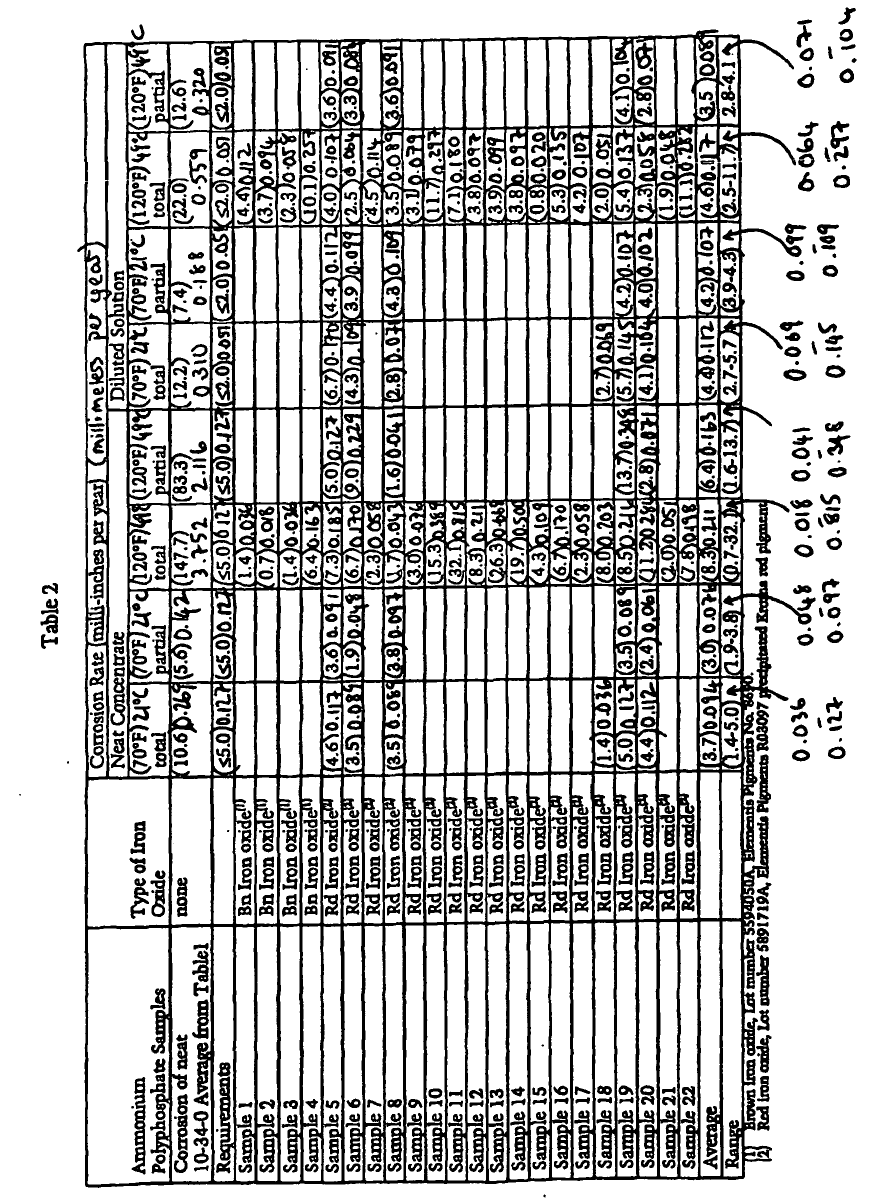

The results indicated that the addition of small amounts of iron oxide and clay reduced the corrosion of totally immersed aluminum in a 21°C (70°F) solution by 50% to 65%. In addition, the impact of the mixture on high temperature corrosion was even more dramatic than at low temperature. When the corrosion cell was stored at 49°C (120°F), the rate of aluminum corrosion decreased by about 75% to 90%. At both temperatures the corrosion rate on partially immersed coupons was greater than 50% of the totally immersed values, which indicated that significant interface or vapor/air phase corrosion occurs when the mixture is present in the solution. This differs from the corrosivity of the neat ammonium polyphosphate solutions of Table 1. However, the addition of 1.2% insoluble iron oxide and a suspending clay to the ammonium polyphosphate samples did not reduce the aluminum 2024-T3 corrosion rate of the concentrates or its solutions to within the limits required by the USDA, Forest Service Specifications.

### EXAMPLE 3-THE ALUMINUM CORROSIVTIY OF AMMONIUM POLYPHOSPHATE SOLUTIONS CONTAINING A MIXTURE OF SOLUBLE AND INSOLUBLE IRON COMPOUNDS

The data in Tables 3a and 3b illustrate the relative effectiveness of a number of corrosion inhibitor systems containing water soluble and water insoluble sources of iron, and mixtures thereof, in several sources and types of ammonium polyphosphate concentrates and their diluted solutions. The samples were prepared by admixing either 10-34-0 or 11-37-0 type ammonium polyphosphate solutions from various sources with varying concentrations of insoluble red iron oxide or brown iron oxide additives and attapulgus clay additives and varying the concentrations of other iron containing additives, as indicated. The solutions were subjected to high shear mixing in order to activate or hydrate the clay.

Each concentrate and its diluted solution was tested for aluminum corrosivity in accordance with the Forest Service Specification protocols. The results are shown in Tables 3a and 3b.

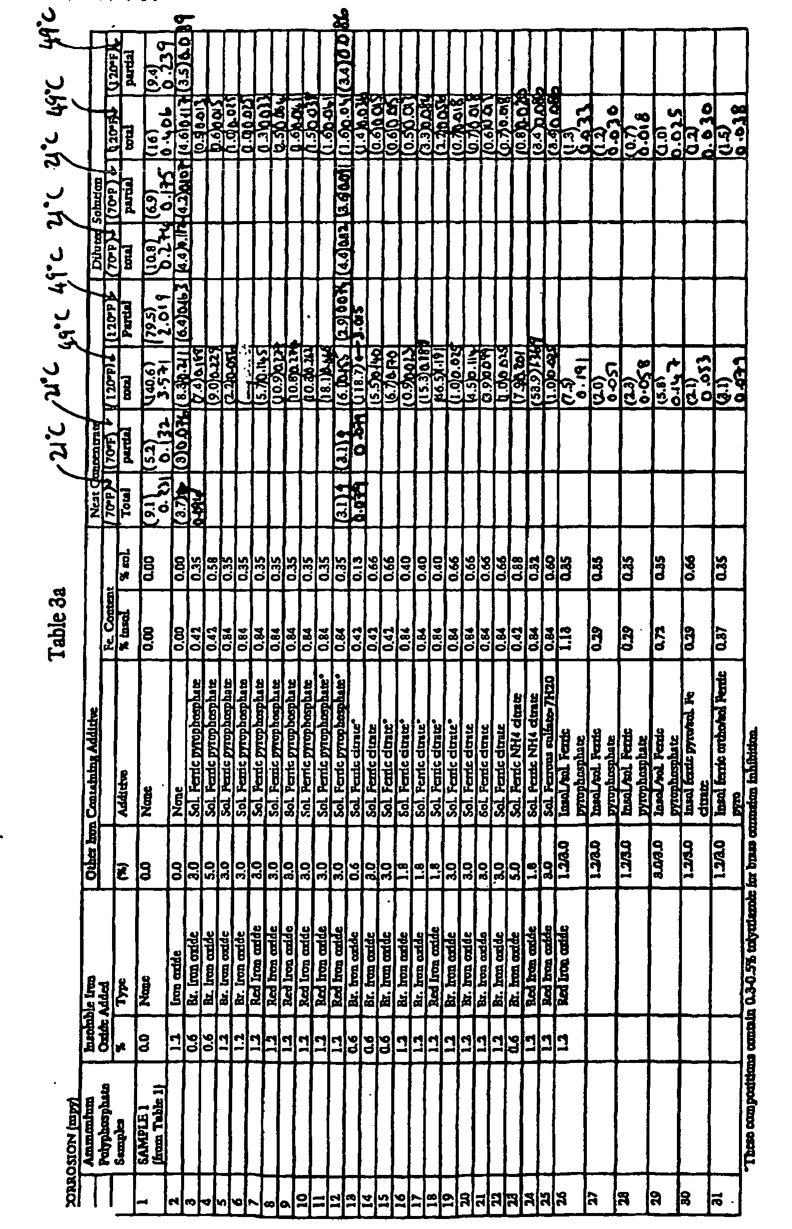

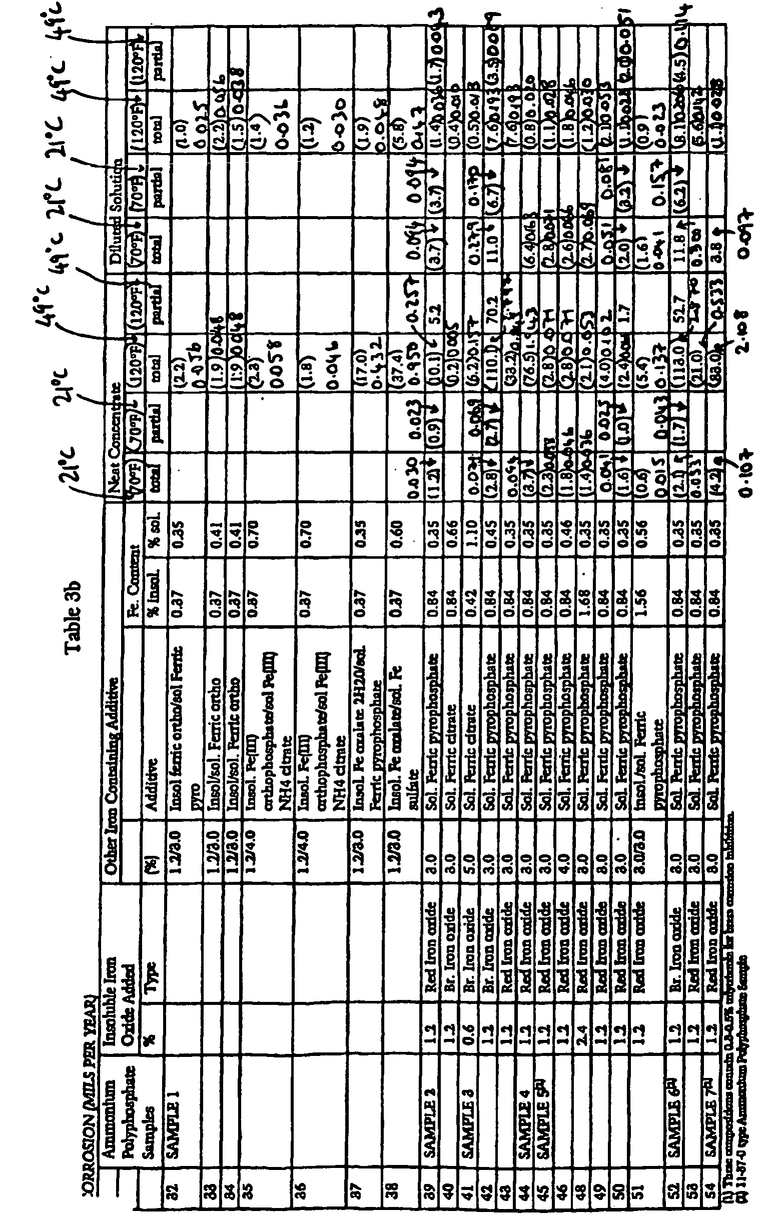

For comparative purposes, line 1 illustrates the average corrosion characteristics of neat concentrate and dilute solutions from Sample 1, taken from Table 1, and line 2 illustrates the corrosion of the concentrate and diluted solutions when 1.2% iron oxide and 1.4% attapulgus clay, with the exception of the formulations on line 9 which contained 0.7% attapulgus clay and the formulation on line 11, which contained 2.8% attapulgus clay, was mixed with the neat concentrate solution, see Table 2. Samples 1-4 were 10-34-0 type ammonium polyphosphate samples obtained from various sources. Samples 5-7 were 11-37-0 type ammonium polyphosphate samples obtained from various sources.

The data in Tables 1 and 2 illustrate that corrosive attack of aluminum was most severe when exposed to the fire retardant concentrate and its solutions at elevated (120°F/49°C) temperature in the totally immersed configuration. Consequently, the evaluation of corrosion inhibiting systems stressed testing under these conditions. Periodic testing at other conditions was conducted. Lines 3 through 6 illustrate the corrosion inhibiting effectiveness of combinations of insoluble brown iron oxide and soluble ferric pyrophosphate. The results indicated that the USDA, Forest Service Specifications for corrosivity of fire retardants were met when 1.2% of the brown iron oxide was used in conjunction with 3.0% of the soluble ferric pyrophosphate. In addition, the results indicated that lower amounts of the insoluble iron oxide resulted in unacceptable corrosion in the concentrated retardant solution.

Lines 7 through 12 illustrate the effectiveness of corrosion inhibiting systems similar to those described in the preceding paragraph, except red iron oxide is substituted for brown iron oxide. The results indicate that the red iron oxide is effective in reducing the aluminum corrosion of the concentrated and diluted ammonium polyphosphate although perhaps not quite as effective as the brown iron oxide.

Lines 13-22 illustrate the corrosion inhibiting effectiveness of mixtures of insoluble iron oxide and soluble ferric citrate. The results indicated that ferric citrate was an equally effective substitute for soluble ferric pyrophosphate. In addition, the results indicate that a mixture of brown iron oxide and 3.0% soluble ferric citrate was capable of reducing the corrosivity of the ammonium polyphosphate samples to within acceptable levels for compliance with Forest Service Specifications for corrosivity of fire retardants.

Lines 23 and 24 illustrate the use of ferric ammonium citrate as a substitute for ferric citrate. The results indicated that the soluble ferric compounds were as effective as ammonium citrate in reducing corrosion of aluminum by ammonium polyphosphate solutions.

Lines 27 through 38 illustrate the effectiveness of systems in which only uncolored, soluble and insoluble iron containing compounds are used rather than the relatively highly colored persistent iron oxides. This is important where true fugitive retardants are desired, whereby the color gradually fades when exposed to natural sunlight and disappears so as not to permanently stain that on which it is applied.

Lines 26 through 38 illustrate the effectiveness of mixtures of soluble and insoluble ferric pyrophosphate. Acceptable aluminum corrosion properties were obtained when 3.0% of the former and 1.2% of the latter were used as the corrosion inhibiting system in an ammonium polyphosphate solution. The results also indicate that an increased level of insoluble ferric pyrophosphate did not further reduce the corrosivity of the concentrate.

Lines 27 though 38 illustrate the aluminum corrosion inhibiting effectiveness of mixtures of the various soluble and insoluble iron compounds. Lines 37 and 38 revealed that, although effective, the tested ferrous salts were less effective at equivalent iron addition rates as compared to the ferric compounds.

Lines 39 through 44 illustrate the aluminum corrosion inhibiting effectiveness of various soluble and insoluble iron compounds when used in conjunction with 10-34-0 ammonium polyphosphate concentrates obtained from alternative sources. These data indicate that the amount and ratio of corrosion inhibitor necessary to reduce corrosivity to an acceptable level will need to be optimized dependent on the source and characteristics thereof.

Lines 45 through 54 illustrate the aluminum corrosion inhibiting effectiveness of the subject compounds when used in various sources of 11-37-0 type ammonium polyphosphate concentrate and their diluted solutions.

### EXAMPLE 4-CORROSION CHARACTERISTICS OF AMMONIUM POLYPHOSPHATE SOLUTIONS CONTAINING WATER SOLUBLE IRON COMPOUNDS

Example 4 illustrates the effectiveness of water-soluble ferric pyrophosphate, ferric citrate and ferrous sulfate as aluminum corrosion inhibitors in ammonium polyphosphate solutions. In each sample, the indicated soluble iron compounds and 1.4% attapulgus clay were admixed with neat ammonium polyphosphate. Aliquots were subsequently drawn from the concentrate and diluted with the prescribed amount of water. The aluminum corrosivity of both the concentrated fire retardants and their diluted solutions was determined in accordance with the aforementioned Forest Service Specifications. The results of this testing is shown in Table 4.

**Table 4**

| Ammonium Polyphosphate Samples | Soluble Iron Added | | | Aluminum Corrosion⁽¹⁾ | |
|---|---|---|---|---|---|
| | (%) | Additive | Total Fe (%) | Concentrate | Dilute Solution |
| Average Sample from Table 1 | 0 | None | 0 | 2.708-4.318 (106.6-170.0) | 0.147-0.991 (5.8-39.0) |
| 1 | 0.6 | Soluble ferric pyrophosphate | 0.07 | (150.6) 3.825 | (1.5) 0.038 |
| 2 | 3.0 | Soluble ferric pyrophosphate | 0.35 | (42.5) 1.080 | (1.6) 0.041 |
| 3 | 3.0 | Soluble ferric pyrophosphate | 0.35 | (75.4) 1.915 | (1.2) 0.030 |
| 4 | 3.0 | Soluble ferric pyrophosphate | 0.35 | (69.3) 1.760 | (1.3) 0.033 |
| 5 | 2.4 | Soluble ferric citrate | 0.53 | (113.1) 2.873 | (2.5) 0.064 |
| 6 | 3.0 | Soluble ferric citrate | 0.66 | (124.1) 3.152 | (2.4) 0.061 |
| 7 | 3.0 | Soluble ferric citrate | 0.66 | (17.0) 0.432 | (1.1) 0.028 |
| 8 | 3.0 | Ferrous sulfate•7H₂O | 0.60 | (27.9) 0.709 | (3.1) 0.079 |

| | | | | | |
|---|---|---|---|---|---|
| (1) Aluminum 2024T3 coupons tested in the manner described in USDA, Forest Service specification 5100-304b. Values obtained when the corrosion cell was maintained at 120°F (50°C) for 90 days with the coupon totally immersed therein. The data is expression in (milli-inches per year.) millimeters per year | | | | | |

The results indicate that both soluble ferric and ferrous iron containing salts show utility as aluminum corrosion inhibitors in ammonium polyphosphate solutions. Relatively small concentrations (0.35%) of soluble iron derived from a soluble ferric pyrophosphate decreased the corrosion rate of totally immersed aluminum exposed to 49°C (120°F) solutions of the diluted fire retardant to within the USDA Forest Service Specification requirements. The data illustrate that soluble iron containing compounds are most effective in controlling the corrosivity of diluted solutions. Since the corrosivity of both the concentrate and its diluted solutions is of importance, mixtures of water soluble and water insoluble iron compounds generally provide superior performance.

### EXAMPLE 5-CORROSION CHARACTERISTICS OF AMMONIUM POLYPHOSPHATE SOLUTIONS CONTAINING OTHER WATER INSOLUBLE IRON COMPOUNDS

Table 5 illustrates the effectiveness of water insoluble ferric orthophosphate, insoluble ferric pyrophosphate and ferrous oxalate as aluminum corrosion inhibitors in ammonium polyphosphate concentrates and their diluted solutions. 1.4% attapulgus clay was mixed with the concentrated ammonium polyphosphate, with the exception of Samples 6 and 7 which contained 0.7% and 2.8% attapulgus clay, respectively. Samples 13, 18 and 24 contained, also, an insoluble iron oxide as a solution colorant. The resultant fire retardant concentrates and their diluted solutions were evaluated in terms of aluminum corrosivity in accordance with the USDA Forest Service Specification requirements. The results of the testing are shown in Table 5.

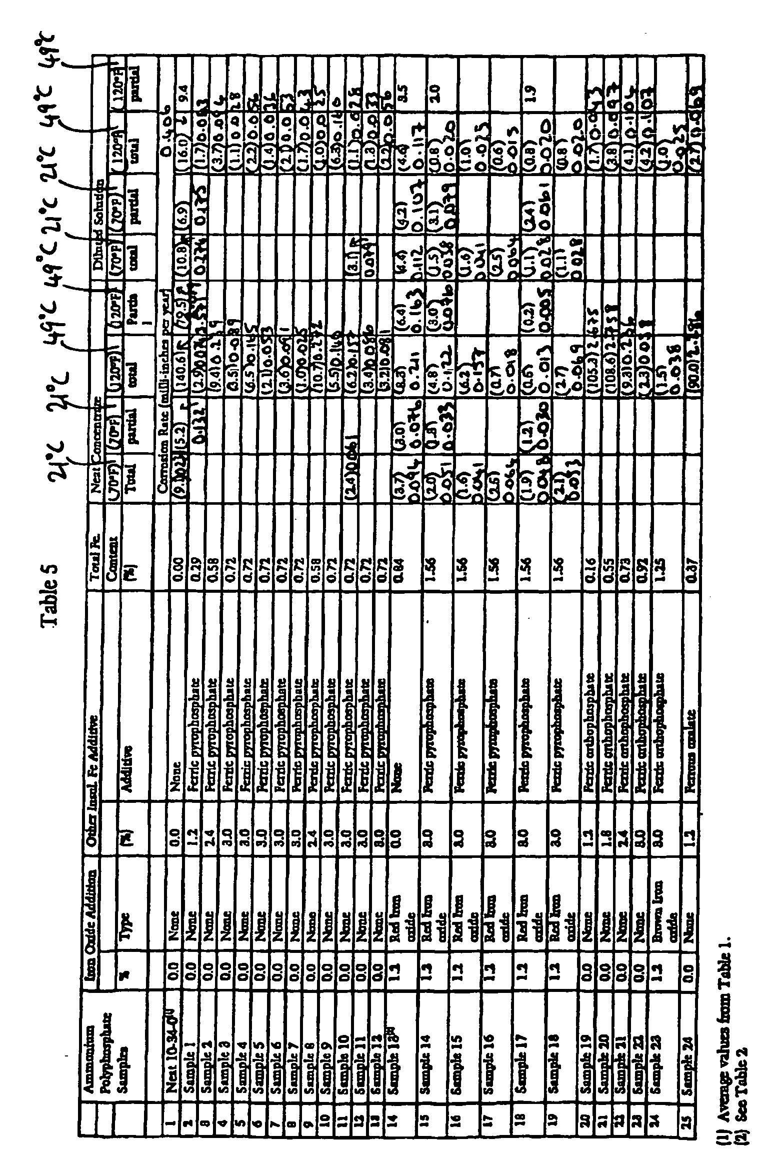

The corrosion inhibiting effectiveness of insoluble ferric pyrophosphate was shown by a comparison of the compositions containing only this component, lines 2-13, with line 1. The effectiveness was also shown by comparison with 1.2% red iron oxide, line 14. These comparisons illustrate the effectiveness of insoluble ferric pyrophosphate as an aluminum corrosion inhibitor for concentrated ammonium polyphosphate and its solutions. It was shown to be superior to red iron oxide when compared on an equal ferric iron level. Accordingly, the insoluble ferric pyrophosphate would be preferred in many applications since it is not highly colored like the conventional iron oxide, which result in highly visible and persistent discoloration of that on which it is applied. Consequently, inhibitor systems containing these components would be suitable for use in fugitive colored fire retardant formulations.

Lines 15-19 illustrate the further reduction in aluminum corrosion, which was obtained by combining iron oxide and ferric pyrophosphate in the same corrosion inhibiting system. The results indicated that several of these formulations met the USDA, Forest Service Specifications for corrosivity of aluminum in both the concentrate and dilute forms.

The data contained in lines 20 and 23 illustrate the effectiveness of insoluble ferric orthophosphate in inhibiting the corrosion of aluminum exposed to ammonium polyphosphate solutions. The results indicated that the pyrophosphate moiety may be somewhat superior to orthophosphate for inhibiting the corrosion of aluminum.

The data contained in line 24 indicates that increasing the ferric iron content of the corrosion inhibiting system by using mixtures of ferric orthophosphate and iron oxide was also an effective way of meeting the USDA, Forest Service Specifications for corrosivity of aluminum.

The data contained in line 25 illustrates the aluminum corrosion inhibiting effectiveness of small amounts of ferrous (FeII) iron when incorporated in ammonium polyphosphate concentrates and their diluted solutions.

### EXAMPLE 6-EFFECTIVENESS OF AZOLES AS CORROSION INHIBITORS IN AMMONIUM POLYPHOSPHATE FIRE RETARDANT COMPOSITIONS

Example 6 illustrates the effectiveness of azoles as yellow brass corrosion inhibitors in concentrated ammonium polyphosphate based fire retardant formulations and in their diluted solutions. Each sample was prepared by mixing 1.4% attapulgus clay, 1.2% red iron oxide and the indicated azole corrosion inhibitor with the neat, concentrated ammonium polyphosphate. Subsequently, the concentrates were diluted with water in the manner described herein. The samples were then tested in accordance with USDA Forest Service Specification requirements.

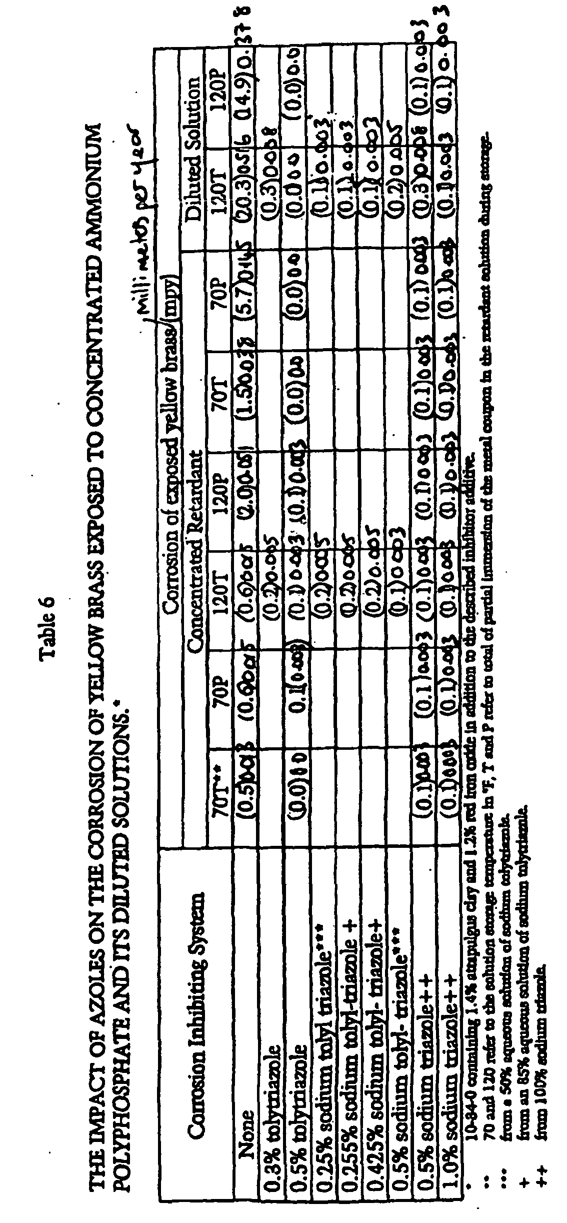

The results indicated that azoles, including both tolytriazoles and salts thereof, are effective corrosion inhibitors for yellow brass in ammonium polyphosphate concentrates and solutions. These data and others included in previous Examples illustrate the advantages of using azoles in conjunction with the iron containing inhibitors of this invention to reduce both aluminum and brass corrosivity of the fire retardant compositions to within desirable limits.

### EXAMPLE 7-THE IMPACT OF XANTHAN BIOPOLYMER ON 11-37-0 BASED LIQUID CONCENTRATE RETARDANT FORMULATIONS

Table 7 illustrates the impact of xanthan (Keltrol BT^{®}) on the viscosity and aluminum corrosion of ammonium polyphosphate fire retardant concentrates and their dilute solutions containing water soluble and water insoluble sources of iron, xanthan biopolymer having a particle size less than about 100 microns, additives and mixtures thereof, as indicated. The samples were prepared by admixing 11-37-0 type ammonium polyphosphate solutions with various concentrations of attapulgus clay, tolytriazole, iron oxide, xanthan gum, insoluble ferric pyrophosphate and soluble ferric pyrophosphate or sodium citrate, as indicated. The solutions were subjected to high shear mixing in order to activate or hydrate the clay, where necessary. Dilution was accomplished by admixing five volumes of water with one volume of the concentrated 11-37-0 or compositions based thereon. All references to xanthan in Tables 7a and 7b refer to a commercial grade of xanthan, Keltrol BT^{®}, which has an average particle diameter less than about 100 microns.

Each concentrate and diluted solution was tested for aluminum corrosivity in accordance with the Forest Service Specification protocols and the viscosity of each concentrate and diluted solution was tested by methods of testing viscosity that are well-known in the art. The results are shown in Tables 7a and 7b,

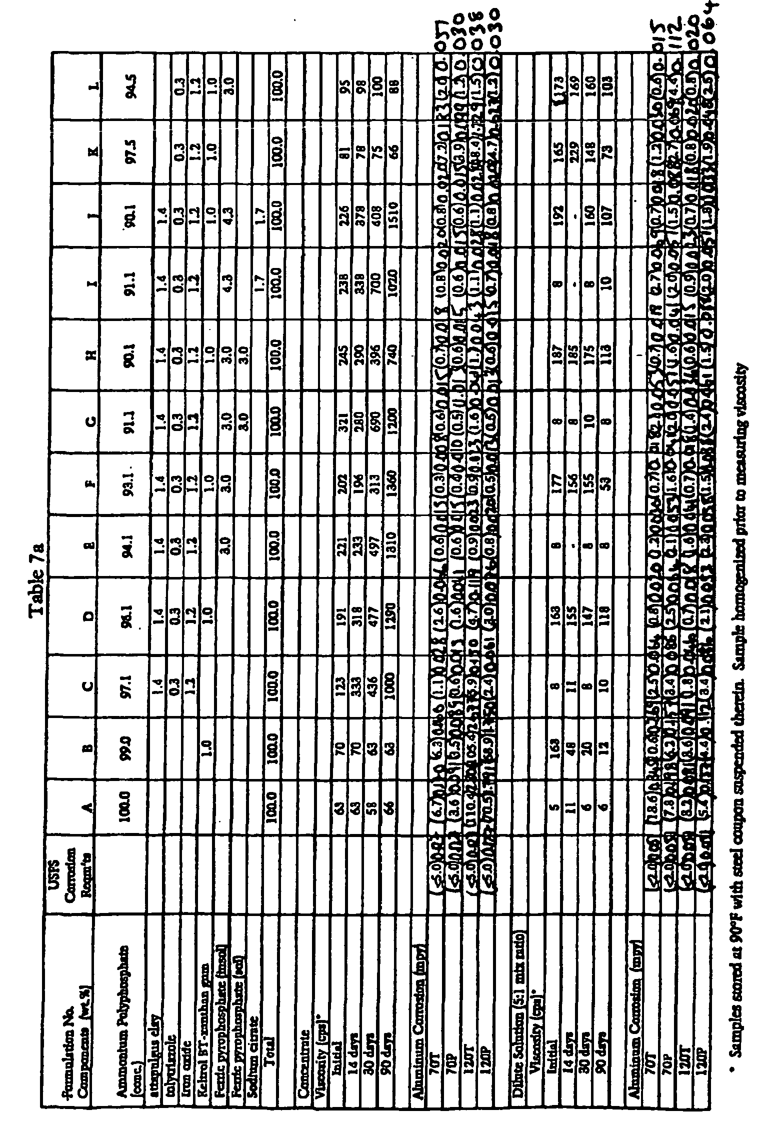

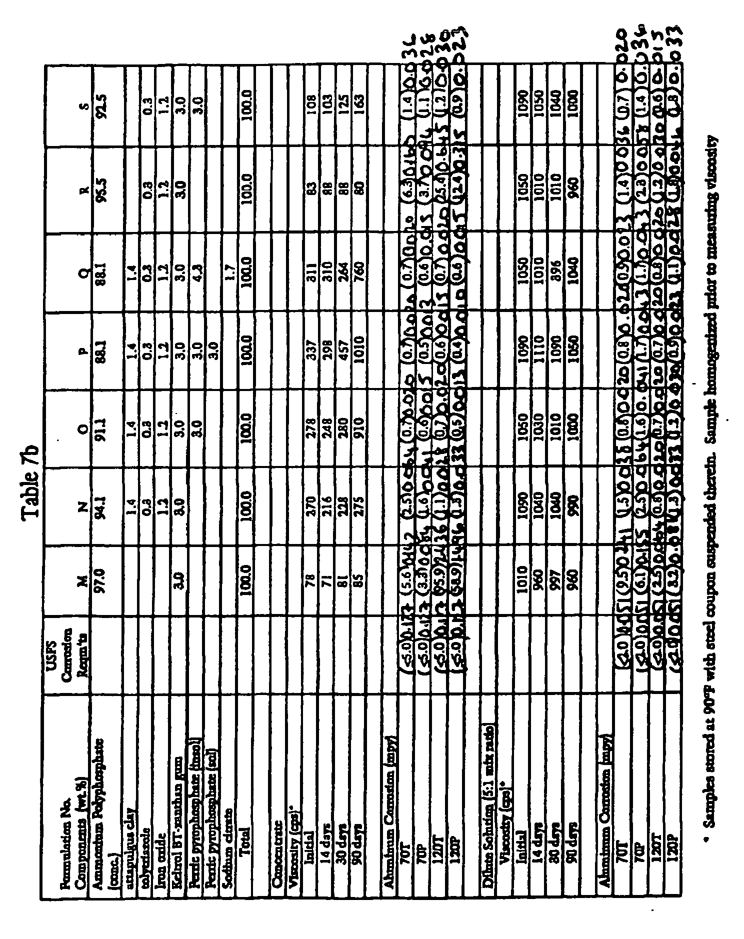

The results indicate that in the absence of an iron containing corrosion inhibitor, the addition of 1.0% xanthan biopolymer has no significant effect on the corrosivity of either concentrated neat ammonium polyphosphate or its diluted solution. With reference to samples A and C, the results indicate that the addition of attapulgus clay, tolytriazole, and pigment grade iron oxide results in a dramatic reduction in the aluminum corrosivity of concentrated 11-37-0 and its diluted solutions.

With reference to samples C and D, the addition of 1.0% xanthan to 11-37-0 compositions containing attapulgus clay, tolytriazole and iron oxide further reduces the aluminum corrosivity of both the concentrated and diluted solutions. As indicated, the aluminum corrosivity of the concentrated solution is reduced to within the corrosion requirements of the specifications, but its diluted solutions, while reduced somewhat, are still marginally unacceptable.

With reference to samples E, G and I, the addition of 3.0% insoluble ferric pyrophosphate, 3.0% each of soluble and insoluble ferric pyrophosphate or a mixture of 4.3% insoluble ferric pyrophosphate, and 1.7% sodium citrate reduce the aluminum corrosivity of both the concentrated and diluted 11-37-0 solutions containing attapulgus clay and iron oxide to about the same degree as 1.0% xanthan.

With reference to samples F, H and J, the addition of 1.0% xanthan to the compositions of samples E, G and I, reduces the aluminum corrosivity of the resultant concentrate and diluted solutions to within the Forest Service Specifications in all testing conditions and situations.

The results also indicate that neat 11-37-0 ammonium polyphosphate concentrate, sample A, exhibits a viscosity of about 65 cps, while its diluted solution has a viscosity of 5-10 cps. The addition of 1.0% xanthan biopolymer to the concentrated 11-37-0 ammonium polyphosphate solution had no significant effect on viscosity. However, upon dilution the viscosity of the resultant solution was increased initially. The viscosity of the solution gradually decreased so that it was insignificantly different than the neat solution after a relatively short period of time.

Samples M through S illustrate the impact of increasing the concentration of xanthan biopolymer from 1.0% to 3.0% in the liquid fire retardant concentrate. The data indicate that the addition of 1.0% biopolymer to an iron containing ammonium polyphosphate composition results in a further reduction in aluminum corrosivity. However, increased concentrations of xanthan biopolymer do not appear to be more effective. Additional xanthan biopolymer does appear, however, to increase the viscosity of the dilute solution to within Forest Service Specifications.

With reference to sample M, the results indicate that 3.0% xanthan biopolymer may have a slight impact on both the viscosity and aluminum corrosivity of concentrated 11-37-0 ammonium polyphosphate compositions. The diluted concentrate exhibits a stable viscosity in the range of 1000 cps, however, its aluminum corrosivity is only slightly reduced.

Samples K and R further indicate that the biopolymer has no significant impact on the viscosity of the concentrated product, but does reduce the aluminum corrosivity thereof by 50% when tested at elevated temperatures. With reference to samples L and S, the results indicate that Forest Service aluminum corrosion requirements can be met in formulations that do not include a suspending agent, such as attapulgus clay.

With reference to samples H and P, the addition of soluble ferric pyrophosphate to formulations containing insoluble ferric polyphosphate and xanthan biopolymers does not further improve aluminum corrosivity.

### EXAMPLE 8-THE IMPACT OF XANTHAN BIOPOLYMERS WITH VARYING PARTICLE SIZING ON THE VISCOSITY OF LIQUID CONCENTRATE FIRE RETARDANTS

Table 8 illustrates the impact of xanthan biopolymers having various particle sizes on the rheological properties of ammonium polyphosphate fire retardant concentrates. The samples were prepared by admixing 3.0% of the xanthan biopolymers of various weight average particle size diameters, as indicated in Table 8, with concentrated ammonium polyphosphate type fire retardants. Dilution was accomplished by admixing five volumes of water with one volume of the concentrated fire retardant.

The viscosity of each dilute solution was tested by methods of testing viscosity that are well-known in the art. The rapid viscosity increase upon dilution (Diluted Viscosity - 10 minutes) was tested. The stable viscosity upon dilution (Diluted Viscosity - 30 days) was tested. The rapid viscosity increase of the solution after one-year (After 1 Year ((cps)) was tested. The stable viscosity of the solution after one-year (After 1 Year ((cps)) was tested. The results are shown below in Table 8.

### TABLE 8 - PROPERTIES OF LIQUID CONCENTRATE FIRE RETARDANTS THICKENED WITH XANTHAN BIOPOLYMER WITH VARYING PARTICLE SIZING

| Xanthan Biopolymer | WT. Ave. Dia (:) | Diluted Viscosity | | Hydration Rate** | After 1 Year ()cps) | |
|---|---|---|---|---|---|---|
| | | 10 Minutes | 30 Days | | 10 Minutes | 30 Days |
| | | | | | | |
| Rhodigel SM^{®} | 31 | 1433 | 1447 | 99 | -40 | -40 |
| Jungbubunzlauer ST^{®} | 38 | 1493 | 1543 | 98 | +10 | -53 |
| Keltrol BT^{®} | 70 | 1147 | 1197 | 96 | +126 | +6 |
| ADM 40 mesh | 98 | 1070 | 1690 | 63 | +337 | +30 |
| ADM dispersible | ∼105 | 250 | 1537 | 16 | +897 | +80 |
| Kelzan^{®} (uncoated) | 110 | 433 | 547 | 79 | NA | NA |
| Kelzan S^{®} (coated) | 150 | 120 | 463 | 26 | - | - |

| | | | | | | |
|---|---|---|---|---|---|---|
| ** 10 minute viscosity as a % of maximum viscosity achieved. | | | | | | |

The results indicate that liquid concentrate fire retardant compositions comprising biopolymers having weight average particle diameters in the range of about 31 to about 70 microns exhibit ideal rheological properties. However, fire retardant concentrates comprised of biopolymers having particle diameters larger than about 100 microns do not exhibit desirable rheological properties.

### EXAMPLE 9-THE IMPACT OF PARTICLE SIZING OF THE VISCOSITY OF BIOPOLYMERS IN LIQUID CONCENTRATE FIRE RETARDANTS

Table 9 illustrates the particle sizing and performance of several xanthan-type biopolymers in comparison with standard hydroxypropyl guar gum in liquid fire retardant concentrates. The samples were prepared by admixing 3.0% xanthan type biopolymers or guar gum, as indicated below in Table 9, with concentrated ammonium polyphosphate type fire retardants. Dilution was accomplished by admixing about five volumes of water with one volume of each dilute fire retardant composition.

The viscosity of each sample ammonium polyphosphate solution was tested by the methods described in Example 8. The results are shown in Table 9 below.

**TABLE 9 - IMPACT OF PARTICLE SIZING ON THE PERFORMANCE OF XANTHAN BIOPOLYMERS IN LIQUID CONCENTRATE SOLUTIONS**

| | | | | | | | ADM | | |
|---|---|---|---|---|---|---|---|---|---|
| Sieve Size | Sieve Opening (microns) | Guar Gum (for comparison | Keltrol BT^{®} | Kelzan^{®} (uncoated) | Kelzan S^{®} Glyoxal coated | Rhodagel SM® | 40 mesh | Dispersible | Jungbunzlauer FST® |
| 60 | 250 | | 0.0 | 9.0 | 22.0 | 0.0 | 2.6 | 4.0 | 0.0 |
| 80 | 177 | | 0.6 | 19.3 | 41.2 | 0.0 | 17.4 | 15.1 | 0.0 |
| 120 | 125 | | 18.9 | 42.9 | 58.3 | 0.0 | 37.7 | 36.2 | 0.0 |
| 230 | 63 | | 56.1 | 77.2 | 79.1 | 2.2 | 68.9 | 75.7 | 2.2 |
| 270 | 53 | | 65.1 | 83.2 | 83.4 | 5.5 | 76.3 | 84.2 | 15.6 |
| 325 | 44 | | 71.1 | 86.9 | 86.3 | 14.7 | 81.5 | 88.9 | 35.8 |
| 400 | 38 | | 76.5 | 89.9 | 88.6 | 28.2 | 85.8 | 91.9 | 50.1 |
| <400 | <38 | | 23.6 | 10.1 | 11.4 | 71.8 | 14.3 | 8.1 | 49.9 |
| | | | | | | | | | |
| Particle Diameter (µ) (Weight average) | | > 100 | 70 | 110 | 150 | 31 | 98 | ∼105 | 38 |
| Diluted Solution Viscosity (cps) | | | | | | | | | |
| Fresh Concentrate | | | | | | | | | |
| | 10 minutes | 1597 | 1147 | 433 | 120 | 1433 | 1070 | 250 | 1493 |
| | 30 days | 63 | 1197 | NA | 463 | 1447 | 1690 | 1537 | 1543 |
| | | | | | | | | | |
| One-Year Old Concentrate | | | | | | | | | |
| | 10 minutes | ∼10 | 1283 | NA | 310* | 1393 | 1407 | 1147 | 1503 |
| | 30 days | ∼10 | 1200 | NA | 697* | 1407 | 1720 | 1617 | 1490 |

| | | | | | | | | | |
|---|---|---|---|---|---|---|---|---|---|
| diluted 30 days after preparation of the concentrate | | | | | | | | | |

The results indicate that fire retardant concentrates comprising xanthan-type biopolymers in the range of about 31 to 70 microns exhibit ideal rheological properties. However, fire retardant concentrates comprised of biopolymers having particle diameters larger than about 100 microns do not exhibit desirable rheological properties. Fire retardant concentrates comprising guar gum having a particle size diameter greater than about 100 microns also fail to exhibit desirable rheological properties. Specifically, ammonium polyphosphate based fire retardant concentrates containing guar gum appear to have highly unstable rheological characteristics, which make the use of guar gum undesirable in some embodiments of the invention. Accordingly, in one embodiment of the invention the compositions of the invention do not include guar gum.

### EXAMPLE 10-THE IMPACT OF PARTICLE SIZING AND BIOPOLYMER TYPE ON THE VISCOSITY OF BIOPOLYMER IN AMMONIUM POLYPHOSPHATE SOLUTIONS

Table 10 illustrates the particle sizing and performance of xanthan-type biopolymers with welan and rhamsan biopolymers in ammonium polyphosphate type liquid fire retardants. The samples were prepared by admixing about 91.1% concentrated liquid ammonium polyphosphate solution, 1.2% attapulgus clay, 0.3% tolytriazole, 3.0% insoluble ferric pyrophosphate and 3.0% of the biopolymer indicated in Tables 10a and 10b. The biopolymers used included Relzan^{®}, Kelzan S^{®}, Keltrol BT^{®}, Helcorete^{®}, and a rhamsan biopolymer, all of which are commercially available from CP Kelco, Wilmington, DE. Kelzan^{®} is an uncoated, conventional xanthan biopolymer, while Kelzan S^{®} is a conventional xanthan biopolymer with an applied surface coating. Keltrol BT^{®} is a xanthan biopolymer having a particle size diameter less than about 100 microns. Kelcocrete is a welan type biopolymer.

The viscosity of each concentrate were measured by methods described in Example 8. Then, each sample was diluted with water at a mix ratio of 5 volumes of water per volume of concentrate. The 10-minute and 18-hour viscosity of the diluted sample was measured and the samples were stored in a laboratory at a temperature of about 21°C-23°C 70°F-74°F for varying periods of time, re-diluted and viscosity measured. The viscosity of each sample was measured at 10 minutes, 1 hour, 24 hours, 7 days, 15 days, 21 days and 28 days after dilution. The results are shown in Tables 10a and 10b below.

**Table 10a**

| IMPACT OF PARTICLE SIZING AND BIOPOLYMER TYPE ON THE VISCOSITY OF AMMONIUM POLYPHOSPHATE TYPE FIRE RETARDANTS | | | | | | |
|---|---|---|---|---|---|---|
| Biopolymer | | Relzan^{®} | Kelzan S^{®} | Keltrol BT^{®} | Kelcocrete^{®} | rhamsan |
| Concentrate Viscosity(CPS) | | 196 | 198 | 189 | 195 | 199 |
| Initial Dilution (CPS) | | | | | | |
| | 10 min. | 433 | 140 | 1100 | 630 | 570 |
| | 18.hrs. | 430 | 170 | 1060 | 1100 | 790 |
| 24 hrs. after Dilution | | | | | | |
| Time after preparation | 10 min. | 563 | 173 | 1093 | 543 | 500 |
| | 18 hrs. | 557 | 203 | 1093 | 1027 | 800 |
| 7 Days after Dilution | | | | | | |
| | 10 min. | 550 | 98 | 1040 | 576 | 507 |
| | 60 min. | 555 | 150 | 1057 | 700 | 620 |
| | 24 hrs. | 590 | 1187 | 11057 | 1043 | 840 |

**Table 10b**

| IMPACT OF PARTICLE SIZING AND BIOPOLYMER TYPE ON THE VISCOSITY OF AMMONIUM POLYPHOSPHATE TYPE FIRE RETARDANTS | | | | | | |
|---|---|---|---|---|---|---|
| Biopolymer | | Kelzan^{®} | Kelzan S^{®} | Keltrol BT^{®} | Kelcocrete^{®} | rhamsan |
| Concentrate Viscosity (CPS) | | 196 | 198 | 189 | 195 | 199 |

| 15 Days after Dilution | | | | | | |
|---|---|---|---|---|---|---|
| | 10 min. | 490 | 160 | 1047 | 440 | 467 |
| | 60 min. | 503 | 177 | 1077 | 617 | 550 |
| | 24 hrs. | 540 | 217 | 1103 | 1010 | 823 |

| 21 Days after Dilution | | | | | | |
|---|---|---|---|---|---|---|
| | 10 min. | 710 | 243 | 1083 | 410 | 550 |
| | 60 min. | 747 | 247 | 1107 | 570 | 663 |
| | 24 hrs. | 687 | 397 | 1043 | 937 | 837 |

| 28 Days after Dilution | | | | | | |
|---|---|---|---|---|---|---|
| | 10 min. | 547 | 200 | 1043 | 937 | 837 |
| | 60 min. | 563 | 237 | 1063 | 650 | 710 |
| | 24 hrs. | 613 | 260 | 1057 | 1047 | 903 |

The results indicate that welan and rhamsan type biopolymers thicken more slowly than xanthan type biopolymers but are effective at increasing the viscosity of ammonium polyphosphate type fire retardant solutions. Xanthan type biopolymers having a particle size diameter of less than about 100 microns, however, rapidly increase the viscosity of ammonium polyphosphate type fire retardants upon dilution. Conventional biopolymers, e.g. xanthan type biopolymers having particle size diameters greater than about 100 microns, fail to develop the viscosity of the fire retardants in a timely manner. Accordingly, both coated and uncoated conventional biopolymers are unsuitable for use in thickening ammonium polyphosphate type fire retardants. In addition, the long-term data, i.e. measured viscosity 7, 15, 21 and 28 days after preparation of the concentrated sample, indicate that there is no particular change in the performance of the various biopolymers during storage in ammonium polyphosphate based fire retardants.

### EXAMPLE 11- IMPACT OF USE LEVELS OF BIOPOLYMERS AND IRON ADDITIVES ON THE VISCOSITY OF AMMONIUM POLYPHOSPHATE SOLUTIONS

The optimal use levels of mixtures of biopolymer and insoluble ferric pyrophosphate when used to reduce the aluminum corrosion level of liquid ammonium polyphosphate type fire retardants and their dilute solutions was analyzed. Formulations were prepared by using ammonium polyphosphate type fire retardants with attapulgus clay, tolytriazole, and in some cases, iron oxide. Biopolymers having average particle size diameters of less than 100 microns and insoluble ferric pyrophosphate were also added, where indicated. Each formulation was prepared by adding the dry components separately to the fire retardants and mixing them using a high shear mixer at approximately 1000 rpm over about a 2 hour period. The high shear was used to hydrate the clay and disperse the insoluble components. Dilute solutions were prepared by admixing 1 part concentrate with 5 parts tap water. The concentrate formulations and their dilute solutions were tested in accordance with all four of the test conditions prescribed by the U.S. Forest Service Specifications, described herein. The results are shown below in Tables 11a, 11b and 11c.

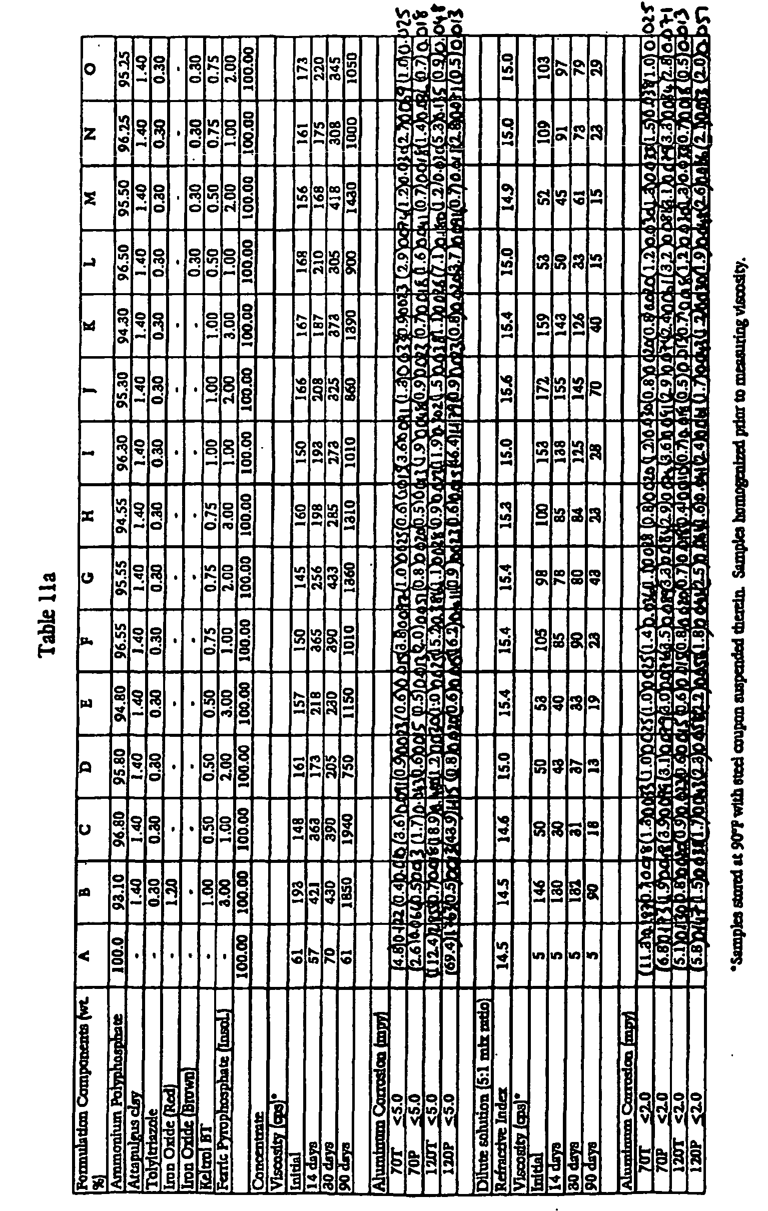

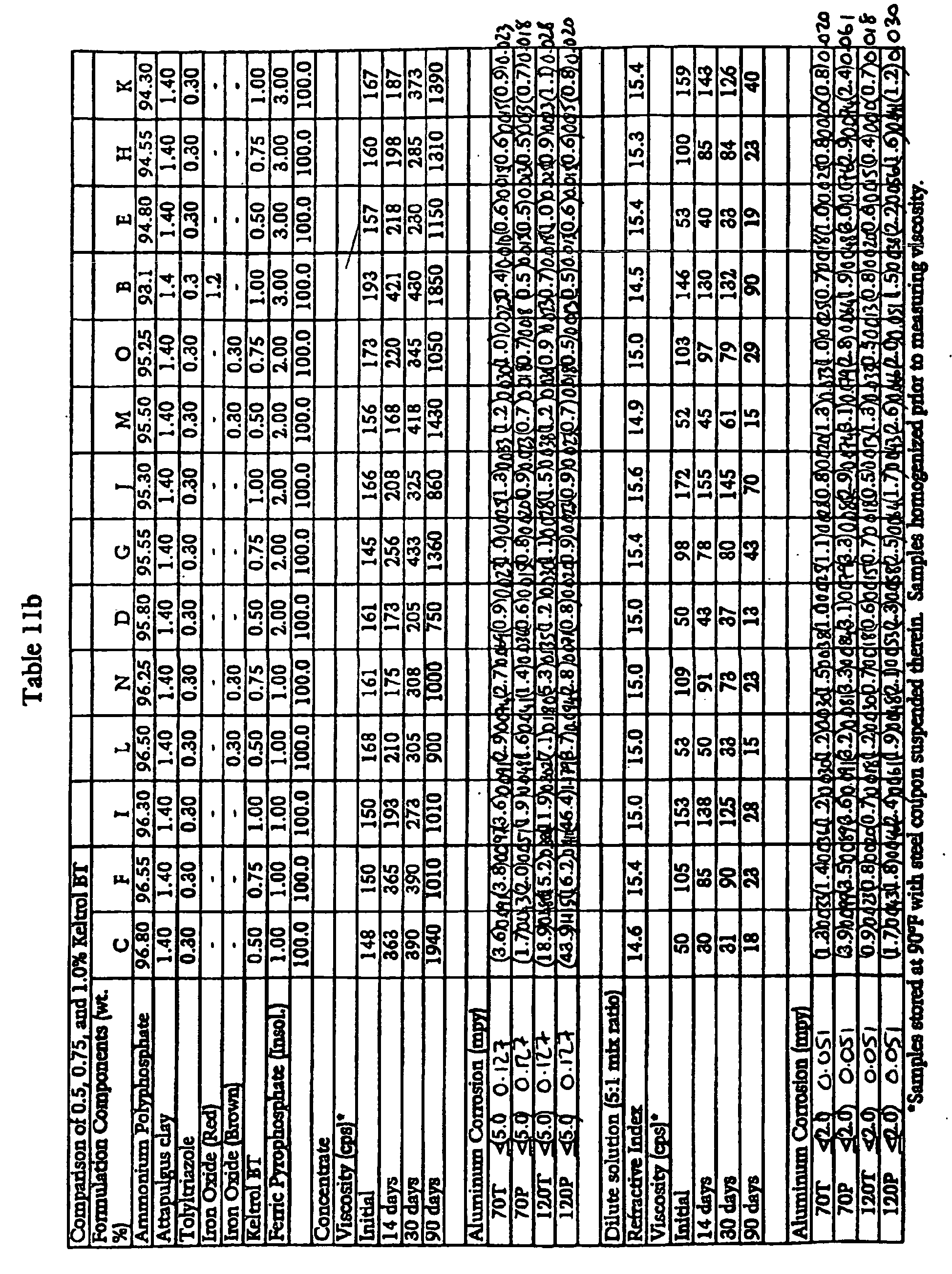

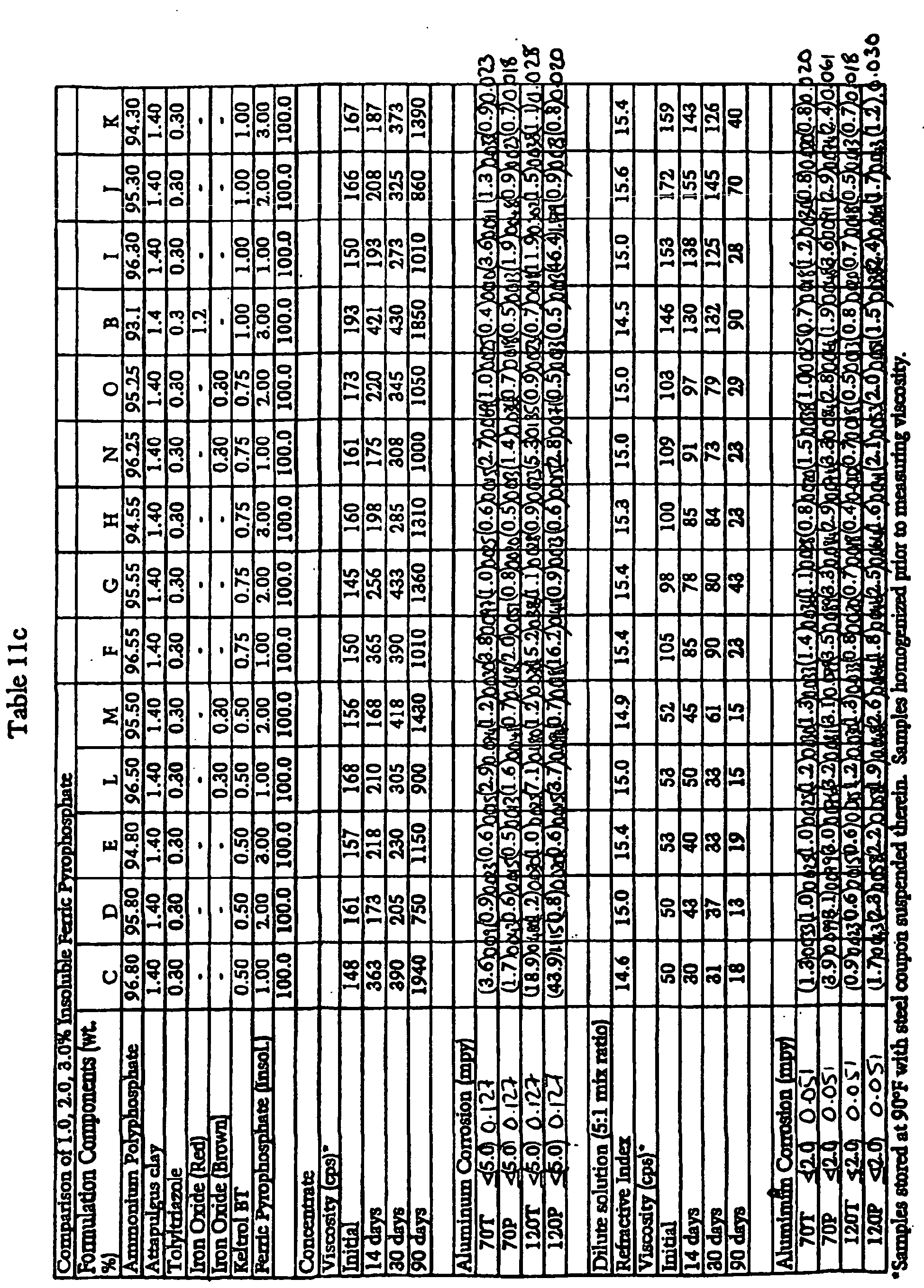

The results indicate that the incorporation of some iron oxide within fire retardant concentrates and solutions of the present inventions is necessary to meet U.S. Forest Service Specification requirements. Fire retardant concentrates that include 1.2% iron oxide, 3% ferric pyrophosphate and 1% biopolymer, and their diluted solutions meet the U.S. Forest Service Specification requirements. The viscosity of the fire retardant concentrates containing 1% biopolymer gradually increased from about 150 to 200 cps immediately after manufacture to 1000 to 2000 cps. After three months of storage at 32°C (90°F,) and upon dilution, the solution viscosity was in the range of 100 to 200 cps.

In view of the above, it is seen that the various objects and features of the invention are achieved and other advantages and results are obtained. Variations and modification may be made to the various steps and compositions of the invention without departing from the scope of the invention.

## Claims

1. A corrosion-inhibited fire retardant composition comprising:
at least one fire retardant comprised of at least one ammonium polyphosphate;
attapulgus clay;
at least one xanthan biopolymer having a weight average particle diameter less than 100 microns;
at least one additive selected from a group of additives consisting of suspending agents, coloring agents, surfactants, stabilizers, corrosion inhibitors, opacifying pigments and any combination thereof; and
a corrosion inhibiting system comprised of at least one corrosion inhibiting compound selected from a group of corrosion inhibiting compounds consisting of azoles, insoluble ferric pyrophosphate, soluble ferric pyrophosphate, ferous oxalate, ferric citrate, ferrous sulfate, ferric ammonium citrate, soluble ferric orthophosphate, insoluble ferric orthophosphate, ferric ammonium oxalate, ferric ammonium sulfate, ferric bromide, ferric sodium oxalate, ferric stearate, ferric sulfate, ferrous acetate, ferrous ammonium sulfate, ferrous bromide, ferrous gluconate, ferrous iodide, ferric acetate, ferric fluoroborate, ferric oleate, ferrous fumarate, ferrous oxide, ferric lactate, ferric resinate, and any combination thereof;
wherein said corrosion inhibiting system is present in a minor amount effective to reduce corrosiveness of said ammonium polyphosphate to a maximum corrosivity to aluminum of 0.127 mm (6.0 mils) per year, as determined by the "Uniform Corrosion" test set forth in Section 4.5.6.1 of "Specification 5100-304b (January 2000) Superseding Specification 5100-00304a (February 1986)," entitled "Specification for Long Term Retardant, Wildland Fire, Aircraft or Ground Application," issued by the United States Department of Agriculture, Forest Service, said corrosion inhibiting system making up from 0.01% by weight to 10% by weight of said corrosion-inhibited fire retardant composition; and
wherein said biopolymer comprises in the range of 0.01 % to 5.0% of said fire retardant composition.

2. The composition of claim 1 wherein said azoles are selected from the group consisting of tolytriazole, benzotriazole, mercaptobenzothiazole, dimercaptothiadiazole, 1,2 benzisothiazoline-3-1, 2-benzimidazolone, 4,5,6,7-tetrahydrobenzotriazole, tolylimidazole, 2-(5-ethyl-2-pyridyl) benzimidazole, phthalimide, any alkali metal salts thereof and combinations thereof.

3. The composition of claim 1 or 2 wherein said composition further comprises a coloring agent selected from the group consisting of fugitive coloring agents, opacifying pigments, and highly colored pigments.

4. The composition of any of claims 1 to 3 wherein said suspending agents are selected from the group consisting of sepiolite, fuller's earth, montmorillonite, and kaolin clay.

5. The composition of any of claims 1 to 4 further comprising water.

6. The composition of any of claims 1 to 5 comprising from 1.0% by weight to 5.0% by weight of said xanthan biopolymer.

7. The composition of any of claims 1 to 6 comprising from 2% by weight to 3% by weight ferric pyrophosphate.

8. The composition of any of claims 1 to 7 comprising from 1% by weight to 2% by weight iron oxide, from 2% by weight to 3% by weight ferric pyrophosphate, from 1% by weight to 5% by weight xanthan biopolymer, from 1% by weight to 2% by weight attapulgus clay, and from 0.01 % by weight to 1% by weight tolytriazole.

9. A method of preparing a corrosion-inhibited fire retardant composition, adapted for aerial application to wildland fires, the method comprising the steps of:
(a) forming an intermediate concentrate composition comprising:
(i) at least one fire retardant comprised of at least one ammonium polyphosphate;
(ii) attapulgus clay;
(iii) at least one additive selected from a group of additives consisting of suspending agents, coloring agents, surfactants, stabilizers, corrosion inhibitors, opacifying pigments and any combination thereof;
(iv) a corrosion inhibiting system comprised of at least one corrosion inhibiting compound selected from a group of corrosion inhibiting compounds consisting of azole, insoluble ferric pyrophosphate, soluble ferric pyrophosphate, insoluble ferrous oxalate, soluble ferric citrate, soluble ferrous sulfate, insoluble ferric ammonium citrate, insoluble ferric orthophosphate, soluble ferric orthophosphate, ferric ammonium oxalate, ferric ammonium sulfate, ferric bromide, ferric sodium oxalate, ferric stearate, ferric sulfate, ferrous acetate, ferrous ammonium sulfate, ferrous bromide, ferrous gluconate, ferrous iodide, ferric fluoroborate, ferric hydroxide, ferric oleate, ferrous fumarate, ferrous oxide, ferric lactate, ferric resinate , and any combination thereof; and
at least one xanthan biopolymer having a weight average particle diameter of less than 100 microns;
wherein said corrosion inhibiting system is present in a minor amount effective to reduce the corrosiveness of said fire retardant composition, in concentrate, to aluminum of 0.127 mm (5.0 mils) per year, as determined by the "Uniform Corrosion" test set forth in Section 4.5.6.1 of "Specification 5100-304b (January 2000) Superseding Specification 5100-00304a (February 1986)," entitled "Specification for Long Term Retardant, Wildland Fire, Aircraft or Ground Application," issued by the United States Department of Agriculture, Forest Service; and
wherein said fire retardant composition comprises in the range of.01% to 5.0% said xanthan biopolymer prior to dilution; and
(b) diluting said intermediate concentrate with water to form said corrosion-inhibited fire retardant composition such that a maximum corrosivity of aluminum is 0.051 mm (2.0 mils) per year, as determined by the "Uniform Corrosion" test set forth in Section 4.5.6.1 of "Specification 5100-304b (January 2000) Superseding Specification 5100-00304a (February 1986)," entitled "Specification for Long Term Retardant, Wildland Fire, Aircraft or Ground Application," issued by the United States Department of Agriculture, Forest Service.

10. A method of suppressing wildland fires comprising aerially applying to wildland vegetation a fire suppressing composition comprising:
water; and
a corrosion-inhibited polyphosphate composition comprising:
at least one ammonium polyphosphate;
attapulgus clay;
in the range of.01% to 5.0% at least one xanthan gum having a weight average particle diameter of less than 100 microns;
at least one additive selected from a group of additives consisting of suspending agents, coloring agents, surfactants, stabilizers, corrosion inhibitors, and any combination thereof; and
a corrosion inhibiting system comprised of at least one corrosion inhibiting compound selected from a group of corrosion inhibiting compounds consisting of azoles, insoluble ferric pyrophosphate, soluble ferric pyrophosphate, ferrous oxalate, ferric citrate, ferrous sulfate, ferric ammonium citrate, soluble ferric orthophosphate, insoluble ferric orthophosphate, ferric ammonium oxalate, ferric ammonium sulfate, ferric bromide, ferric sodium oxalate, ferric stearate, ferric sulfate, ferrous acetate, ferrous ammonium sulfate, ferrous bromide, ferrous gluconate, ferrous iodide, ferric acetate, ferric fluoroborate, ferric hydroxide ferric oleate, ferous fumarate, ferrous oxide, ferric lactate, ferric resinate and any combination thereof;
wherein said corrosion inhibiting system is present in a minor amount effective to reduce corrosiveness to said ammonium polyphosphate, in concentrate, to a maximum corrosivity to aluminum of 0.127 mm (5.0 mils) per year, as determined by the "Uniform Corrosion" test set forth in Section 4.5.6.1 of "Specification 5100-304b (January 2000) Superseding Specification 5100-00304a (February 1986)," entitled "Specification for Long Term Retardant, Wildland Fire, Aircraft or Ground Application," issued by the United States Department of Agriculture, Forest Service.

11. The method of claim 9 or 10 wherein said corrosion inhibiting system further comprises a coloring agent selected from the group consisting of fugitive coloring agents, opacifying pigments, and highly colored pigments.

12. The method of any of claims 9 to 11 wherein said suspending agents are selected from the group consisting of Fuller's earth, montmorillonite, sepiolite and kaolin clay.

13. The method of any of claims 9 to 12 wherein said xanthan biopolymer is present in said composition for inhibiting corrosion or in said fire retardant composition in a concentration of from 1.0% by weight to 5.0% by weight.

14. The method of any of claims 9 to 13 wherein said corrosion-inhibited fire retardant composition or said fire suppressing composition comprises from 2% by weight to 3% by weight ferric pyrophosphate.

15. The method of any of claims 9 to 14 wherein said corrosion-inhibited fire retardant composition or said fire suppressing composition comprises from 1% by weight to 2% by weight iron oxide, from 2% by weight to 3% by weight ferric pyrophosphate, from 1% by weight to 5% by weight xanthan biopolymer, from 1% by weight to 2% by weight attapulgus clay, and from 0.01% by weight to 1% by weight tolytriazole.

16. The method of claim 9 to 15 wherein said corrosion inhibiting system is present in the range of 0.01% to 10.0% by weight of the total corrosion-inhibited fire retardant or said fire suppressing composition.

## Patentansprüche

1. Korrosionshemmende Flammschutzzusammensetzung, die Folgendes umfasst:
zumindest ein Flammschutzmittel, das aus zumindest einem Ammoniumpolyphosphat besteht;
Attapulgit;
zumindest ein Xanthan-Biopolymer mit einem gewichtsmittleren Teilchendurchmesser von weniger als 100 µm;
zumindest ein Additiv, das aus einer Gruppe von Additiven ausgewählt ist, die aus Suspensionsmitteln, Farbmitteln, Tensiden, Stabilisatoren, Korrosionshemmern, Deckpigmenten und beliebigen Kombinationen davon besteht; und
ein korrosionshemmendes System, das aus zumindest einer korrosionshemmenden Verbindung besteht, die aus einer Gruppe von korrosionshemmenden Verbindungen ausgewählt ist, die aus Azolen, unlöslichem Eisen(III)-pyrophosphat, löslichem Eisen(III)-pyrophosphat, Eisen(II)-oxalat, Eisen(III)-citrat, Eisen(II)-sulfat, Eisen(III)-ammoniumcitrat, löslichem Eisen(III)-orthophosphat, unlöslichem Eisen(III)-orthophosphat, Eisen(III)-ammoniumoxalat, Eisen(III)-ammoniumsulfat, Eisen(III)-bromid, Eisen(III)-natriumoxalat, Eisen(III)-stearat, Eisen(III)-sulfat, Eisen(II)-acetat, Eisen(II)-ammoniumsulfat, Eisen(II)-bromid, Eisen(II)-gluconat, Eisen(II)-iodid, Eisen(III)-acetat, Eisen(III)-fluorborat, Eisen(III)-oleat, Eisen(II)-fumarat, Eisen(II)-oxid, Eisen(III)-lactat, Eisen(III)-resinat und beliebigen Kombinationen davon besteht;
wobei das korrosionshemmende System in einer geringen Menge vorhanden ist, die wirksam ist, um die Korrosivität des Ammoniumpolyphosphats auf eine maximale Korrosivität bezüglich Aluminium von 0,127 mm (5,0 Mil) pro Jahr zu senken, bestimmt mithilfe des Testsets "Uniform Corrosion", das in Abschnitt 4.5.6.1 der "Specification 5100-304b (January 2000) Superseding Specification 5100-00304a (February 1986)" mit dem Titel "Specification for Long Term Retardant, Wildland Fire, Aircraft or Ground Application" beschrieben ist, die vom United States Department of Agriculture, Forest Service herausgegeben wurde, wobei das korrosionshemmende System 0,01 Gew.-% bis 10 Gew.-% der korrosionshemmenden Flammschutzzusammensetzung ausmacht; und
wobei das Biopolymer etwa 0,01 % bis etwa 5,0 % der Flammschutzzusammensetzung ausmacht.

2. Zusammensetzung nach Anspruch 1, wobei die Azole aus der aus Tolytriazol, Benzotriazol, Mercaptobenzothiazol, Dimercaptothiadiazol, 1,2-Benzisothiazolin-3-on, 2-Benzimidazolon, 4,5,6,7-Tetrahydrobenzotriazol, Tolylimidazol, 2-(5-Ethyl-2-pyridyl)benzimidazol, Phthalimid, beliebigen Alkalimetallsalzen davon und Kombinationen davon bestehenden Gruppe ausgewählt sind.

3. Zusammensetzung nach Anspruch 1 oder 2, wobei die Zusammensetzung weiters ein Farbmittel umfasst, das aus der aus unechten Farbstoffen, Deckpigmenten und stark gefärbten Pigmenten bestehenden Gruppe ausgewählt ist.

4. Zusammensetzung nach einem der Ansprüche 1 bis 3, wobei die Suspensionsmittel aus der aus Sepiolit, Fullererde, Montmorillonit und Kaolin bestehenden Gruppe ausgewählt sind.

5. Zusammensetzung nach einem der Ansprüche 1 bis 4, die weiters Wasser umfasst.

6. Zusammensetzung nach einem der Ansprüche 1 bis 5, die 1,0 Gew.-% bis 5,0 Gew.-% des Xanthan-Biopolymers umfasst.

7. Zusammensetzung nach einem der Ansprüche 1 bis 6, die 2 Gew.-% bis 3 Gew.-% Eisen(III)-pyrophosphat umfasst.

8. Zusammensetzung nach einem der Ansprüche 1 bis 7, die 1 Gew.-% bis 2 Gew.-% Eisenoxid, 2 Gew.-% bis 3 Gew.-% Eisen(III)-pyrophosphat, 1 bis 5 Gew.-% Xanthan-Biopolymer, 1 Gew.-% bis 2 Gew.-% Attapulgit und 0,01 Gew.-% bis 1 Gew.-% Tolytriazol umfasst.

9. Verfahren zur Herstellung einer korrosionshemmenden Flammschutzzusammensetzung, die zur Anwendung aus der Luft bei Freilandbränden angepasst ist, wobei das Verfahren folgende Schritte umfasst:
(a) Bilden einer konzentrierten Zwischenzusammensetzung, umfassend:
(i) zumindest ein Flammschutzmittel, das aus zumindest einem Ammoniumpolyphosphat besteht;
(ii) Attapulgit;
(iii) zumindest ein Additiv, das aus einer Gruppe von Additiven ausgewählt ist, die aus Suspensionsmitteln, Farbmitteln, Tensiden, Stabilisatoren, Korrosionshemmern, Deckpigmenten und beliebigen Kombinationen davon besteht; und
(iv) ein korrosionshemmendes System, das aus zumindest einer korrosionshemmenden Verbindung besteht, die aus einer Gruppe von korrosionshemmenden Verbindungen ausgewählt ist, die aus Azol, unlöslichem Eisen(III)-pyrophosphat, löslichem Eisen(III)-pyrophosphat, unlöslichem Eisen(II)-oxalat, löslichem Eisen(III)-citrat, löslichem Eisen(II)-sulfat, unlöslichem Eisen(III)-ammoniumcitrat, unlöslichem Eisen(III)-orthophosphat, löslichem Eisen(III)-orthophosphat, Eisen(III)-ammoniumoxalat, Eisen(III)-ammoniumsulfat, Eisen(III)-bromid, Eisen(III)-natriumoxalat, Eisen(III)-stearat, Eisen(III)-sulfat, Eisen(II)-acetat, Eisen(II)-ammoniumsulfat, Eisen(II)-bromid, Eisen(II)-gluconat, Eisen(II)-iodid, Eisen(III)-fluorborat, Eisen(III)-hydroxid, Eisen(III)-oleat, Eisen(II)-fumarat, Eisen(II)-oxid, Eisen(III)-lactat, Eisen(III)-resinat und beliebigen Kombinationen davon besteht; und
zumindest ein Xanthan-Biopolymer mit einem gewichtsmittleren Teilchendurchmesser von weniger als 100 µm;
wobei das korrosionshemmende System in einer geringen Menge vorhanden ist, die wirksam ist, um die Korrosivität der Flammschutzzusammensetzung, in konzentrierter Form, bezüglich Aluminium auf 0,127 mm (5,0 Mil) pro Jahr zu senken, bestimmt mithilfe des Testsets "Uniform Corrosion", das in Abschnitt 4.5.6.1 der "Specification 5100-304b (January 2000) Superseding Specification 5100-00304a (February 1986)" mit dem Titel "Specification for Long Term Retardant, Wildland Fire, Aircraft or Ground Application" beschrieben ist, die vom United States Department of Agriculture, Forest Service herausgegeben wurde, und
wobei die Flammschutzzusammensetzung 0,01 % bis 5,0 % des Xanthan-Biopolymers vor der Verdünnung umfasst; und
(b) Verdünnen des Zwischenkonzentrats mit Wasser, um die korrosionshemmende Flammschutzzusammensetzung zu bilden, sodass eine maximale Korrosivität von Aluminium 0,051 mm (2,0 Mil) pro Jahr beträgt, bestimmt mithilfe des Testsets "Uniform Corrosion", das in Abschnitt 4.5.6.1 der "Specification 5100-304b (January 2000) Superseding Specification 5100-00304a (February 1986)" mit dem Titel "Specification for Long Term Retardant, Wildland Fire, Aircraft or Ground Application" beschrieben ist, die vom United States Department of Agriculture, Forest Service herausgegeben wurde.

10. Verfahren zur Unterdrückung von Freilandbränden, welches das Anwenden einer Feuerunterdrückungsszusammensetzung aus der Luft auf Freilandvegetation umfasst, die Folgendes umfasst:
Wasser; und
eine korrosionshemmende Polyphosphatzusammensetzung, umfassend:
zumindest ein Ammoniumpolyphosphat;
Attapulgit;
0,01 % bis 5,0 % von zumindest einem Xanthangummi mit einem gewichtsmittleren Teilchendurchmesser von weniger als 100 µm;
zumindest ein Additiv, das aus einer Gruppe von Additiven ausgewählt ist, die aus Suspensionsmitteln, Farbmitteln, Tensiden, Stabilisatoren, Korrosionshemmern und beliebigen Kombinationen davon besteht; und
ein korrosionshemmendes System, das aus zumindest einer korrosionshemmenden Verbindung besteht, die aus einer Gruppe von korrosionshemmenden Verbindungen ausgewählt ist, die aus Azolen, unlöslichem Eisen(III)-pyrophosphat, löslichem Eisen(III)-pyrophosphat, Eisen(II)-oxalat, Eisen(III)-citrat, Eisen(II)-sulfat, Eisen(III)-ammoniumcitrat, löslichem Eisen(III)- orthophosphat, unlöslichem Eisen(III)-orthophosphat, Eisen(III)-ammoniumoxalat, Eisen(III)-ammoniumsulfat, Eisen(III)-bromid, Eisen(III)-natriumoxalat, Eisen(III)-stearat, Eisen(III)-sulfat, Eisen(II)-acetat, Eisen(II)-ammoniumsulfat, Eisen(II)-bromid, Eisen(II)-gluconat, Eisen(II)-iodid, Eisen(III)-acetat, Eisen(III)-fluorborat, Eisen(III)-hydroxid, Eisen(III)-oleat, Eisen(II)-fumarat, Eisen(II)-oxid, Eisen(III)-lactat, Eisen(III)-resinat und beliebigen Kombinationen davon besteht;
wobei das korrosionshemmende System in einer geringen Menge vorhanden ist, die wirksam ist, um die Korrosivität des Ammoniumpolyphosphats, in konzentrierter Form, auf eine maximale Korrosivität bezüglich Aluminium von 0,127 mm (5,0 Mil) pro Jahr zu senken, bestimmt mithilfe des Testsets "Uniform Corrosion", das in Abschnitt 4.5.6.1 der "Specification 5100-304b (January 2000) Superseding Specification 5100-00304a (February 1986)" mit dem Titel "Specification for Long Term Retardant, Wildland Fire, Aircraft or Ground Application" beschrieben ist, die vom United States Department of Agriculture, Forest Service herausgegeben wurde.

11. Verfahren nach Anspruch 9 oder 10, wobei das korrosionshemmende System weiters ein Farbmittel umfasst, das aus der aus unechten Farbstoffen, Deckpigmenten und stark gefärbten Pigmenten bestehenden Gruppe ausgewählt ist.

12. Verfahren nach einem der Ansprüche 9 bis 11, wobei die Suspensionsmittel aus der aus Fullererde, Montmorillonit, Sepiolit und Kaolin bestehenden Gruppe ausgewählt sind.

13. Verfahren nach einem der Ansprüche 9 bis 12, wobei das Xanthan-Biopolymer in der Zusammensetzung zur Hemmung von Korrosion oder in der Flammschutzzusammensetzung in einer Konzentration von 1,0 Gew.-% bis 5,0 Gew.-% vorhanden ist.

14. Verfahren nach einem der Ansprüche 9 bis 13, wobei die korrosionshemmende Flammschutzzusammensetzung oder die Feuerunterdrückungsszusammensetzung 2 Gew.-% bis 3 Gew.-% Eisen(III)-pyrophosphat umfasst.

15. Verfahren nach einem der Ansprüche 9 bis 14, wobei die korrosionshemmende Flammschutzzusammensetzung oder die Feuerunterdrückungsszusammensetzung 1 Gew.-% bis 2 Gew.-% Eisenoxid, 2 Gew.-% bis 3 Gew.-% Eisen(III)-pyrophosphat, 1 bis 5 Gew.-% Xanthan-Biopolymer, 1 Gew.-% bis 2 Gew.-% Attapulgit und 0,01 Gew.-% bis 1 Gew.-% Tolytriazol umfasst.

16. Verfahren nach Anspruch 9 bis 15, wobei das korrosionshemmende System in einer Menge von 0,01 bis 10,0 Gew.-% in der gesamten korrosionshemmenden Flammschutzzusammensetzung oder der Feuerunterdrückungsszusammensetzung vorhanden ist.

## Revendications

1. Composition ignifuge à pouvoir corrosif inhibé comprenant :
au moins un retardateur d'inflammation constitué d'au moins un polyphosphate d'ammonium ;
de l'argile attapulgite ;
au moins un biopolymère de xanthane ayant une granulométrie moyenne en masse inférieure à 100 micromètres ;
au moins un additif choisi dans le groupe d'additifs constitué par les agents de mise en suspension, les agents colorants, les tensioactifs, les stabilisants, les inhibiteurs de corrosion, les pigments opacifiants et l'une quelconque de leurs combinaisons ; et
un système inhibiteur de corrosion constitué d'au moins un composé inhibiteur de corrosion choisi dans le groupe de composés inhibiteurs de corrosion constitué par les azoles, le pyrophosphate ferrique insoluble, le pyrophosphate ferrique soluble, l'oxalate ferreux, le citrate ferrique, le sulfate ferreux, le citrate d'ammonium ferrique, l'orthophosphate ferrique soluble, l'orthophosphate ferrique insoluble, l'oxalate d'ammonium ferrique, le sulfate d'ammonium ferrique, le bromure ferrique, l'oxalate de sodium ferrique, le stéarate ferrique, le sulfate ferrique, l'acétate ferreux, le sulfate d'ammonium ferreux, le bromure ferreux, le gluconate ferreux, l'iodure ferreux, l'acétate ferrique, le fluoroborate ferrique, l'oléate ferrique, le fumarate ferreux, l'oxyde ferreux, le lactate ferrique, le résinate ferrique, et l'une quelconque de leurs combinaisons ;
dans laquelle ledit système inhibiteur de corrosion est présent en une quantité mineure efficace pour réduire la corrosivité dudit polyphosphate d'ammonium à une corrosivité maximale vis-à-vis de l'aluminium de 0,127 mm (5,0 mils) par an, telle que déterminée par le test "Uniform Corrosion" présenté dans la Section 4.5.6.1 de "Specification 5100-304b (janvier 2000) Superseding Specification 5100-00304a (février 1986)", intitulée "Specification for Long Term Retardant, Wildland Fire, Aircraft or Ground Application", émise par le Département de l'Agriculture des Etats-Unis, Service des Forêts, ledit système inhibiteur de corrosion représentant de 0,01 % en poids à 10 % en poids de ladite composition ignifuge à pouvoir corrosif inhibé ; et
dans laquelle ledit biopolymère représente de 0,01 % à 5,0 % de ladite composition ignifuge.

2. Composition selon la revendication 1, dans laquelle lesdits azoles sont choisis dans le groupe constitué par le tolyltriazole, le benzotriazole, le mercaptobenzothiazole, le dimercaptothiadiazole, la 1,2-benzisothiazoline-3-1,2-benzimidazolone, le 4,5,6,7-tétrahydrobenzotriazole, le tolylimidazole, le 2-(5-éthyl-2-pyridyl)benzimidazole, le phtalimide, n'importe lequel de leurs sels de métal alcalin, et leurs combinaisons.

3. Composition selon la revendication 1 ou 2, laquelle composition comprend en outre un agent colorant choisi dans le groupe constitué par les agents colorants fugitifs, les pigments opacifiants, et les pigments fortement colorés.

4. Composition selon l'une quelconque des revendications 1 à 3, dans laquelle lesdits agents de mise en suspension sont choisis dans le groupe constitué par la sépiolite, la terre à foulon, la montmorillonite, et l'argile kaolin.

5. Composition selon l'une quelconque des revendications 1 à 4, comprenant en outre de l'eau.

6. Composition selon l'une quelconque des revendications 1 à 5, comprenant de 1,0 % en poids à 5,0 % en poids dudit biopolymère de xanthane.

7. Composition selon l'une quelconque des revendications 1 à 6, comprenant de 2 % en poids à 3 % en poids de pyrophosphate ferrique.

8. Composition selon l'une quelconque des revendications 1 à 7, comprenant de 1 % en poids à 2 % en poids d'oxyde de fer, de 2 % en poids à 3 % en poids de pyrophosphate ferrique, de 1 % en poids à 5 % en poids de biopolymère de xanthane, de 1 % en poids à 2 % en poids d'argile attapulgite, et de 0,01 % en poids à 1 % en poids de tolyltriazole.

9. Procédé pour préparer une composition ignifuge à pouvoir corrosif inhibé, adaptée pour une application aérienne à des feux de broussailles, le procédé comprenant les étapes consistant à :
(a) former une composition concentrée intermédiaire comprenant :
(i) au moins un retardateur d'inflammation constitué d'au moins un polyphosphate d'ammonium ;
(ii) de l'argile attapulgite ;
(iii) au moins un additif choisi dans le groupe d'additifs constitué par les agents de mise en suspension, les agents colorants, les tensioactifs, les stabilisants, les inhibiteurs de corrosion, les pigments opacifiants et l'une quelconque de leurs combinaisons ;
(iv) un système inhibiteur de corrosion constitué d'au moins un composé inhibiteur de corrosion choisi dans le groupe de composés inhibiteurs de corrosion constitué par l'azole, le pyrophosphate ferrique insoluble, le pyrophosphate ferrique soluble, l'oxalate ferreux insoluble, le citrate ferrique soluble, le sulfate ferreux soluble, le citrate d'ammonium ferrique insoluble, l'orthophosphate ferrique insoluble, l'orthophosphate ferrique soluble, l'oxalate d'ammonium ferrique, le sulfate d'ammonium ferrique, le bromure ferrique, l'oxalate de sodium ferrique, le stéarate ferrique, le sulfate ferrique, l'acétate ferreux, le sulfate d'ammonium ferreux, le bromure ferreux, le gluconate ferreux, l'iodure ferreux, le fluoroborate ferrique, l'hydroxyde ferrique, l'oléate ferrique, le fumarate ferreux, l'oxyde ferreux, le lactate ferrique, le résinate ferrique, et l'une quelconque de leurs combinaisons ; et
au moins un biopolymère de xanthane ayant une granulométrie moyenne en masse inférieure à 100 micromètres ;
ledit système inhibiteur de corrosion étant présent en une quantité mineure efficace pour réduire la corrosivité de ladite composition ignifuge, sous forme concentrée, vis-à-vis de l'aluminium, de 0,127 mm (5,0 mils) par an, telle que déterminée par le test "Uniform Corrosion" présenté dans la Section 4.5.6.1 de "Specification 5100-304b (janvier 2000) Superseding Specification 5100-00304a (février 1986)", intitulée "Specification for Long Term Retardant, Wildland Fire, Aircraft or Ground Application", émise par le Département de l'Agriculture des Etats-Unis, Service des Forêts ; et
ladite composition ignifuge comprenant, avant dilution, ledit biopolymère de xanthane à raison de 0,01 % à 5,0 % ; et
(b) diluer ledit concentré intermédiaire avec de l'eau pour former ladite composition ignifuge à pouvoir corrosif inhibé, de façon que la corrosivité maximale vis-à-vis de l'aluminium soit de 0,051 mm (2,0 mils) par an, telle que déterminée par le test "Uniform Corrosion" présenté dans la Section 4.5.6.1 de "Specification 5100-304b (janvier 2000) Superseding Specification 5100-00304a (février 1986)", intitulée "Specification for Long Term Retardant, Wildland Fire, Aircraft or Ground Application", émise par le Département de l'Agriculture des Etats-Unis, Service des Forêts.

10. Procédé pour supprimer les feux de broussailles, comprenant l'application par voie aérienne, à la végétation de broussailles, d'une composition d'extinction comprenant
: de l'eau ; et
une composition de polyphosphate à pouvoir corrosif inhibé comprenant :
au moins un polyphosphate d'ammonium ;
de l'argile attapulgite ;
à raison de 0,01 % à 5,0 %, au moins une gomme xanthane ayant une granulométrie moyenne en masse inférieure à 100 micromètres ;
au moins un additif choisi dans le groupe d'additifs constitué par les agents de mise en suspension, les agents colorants, les tensioactifs, les stabilisants, les inhibiteurs de corrosion et l'une quelconque de leurs combinaisons ; et
un système inhibiteur de corrosion constitué d'au moins un composé inhibiteur de corrosion choisi dans le groupe de composés inhibiteurs de corrosion constitué par les azoles, le pyrophosphate ferrique insoluble, le pyrophosphate ferrique soluble, l'oxalate ferreux, le citrate ferrique, le sulfate ferreux, le citrate d'ammonium ferrique, l'orthophosphate ferrique soluble, l'orthophosphate ferrique insoluble, l'oxalate d'ammonium ferrique, le sulfate d'ammonium ferrique, le bromure ferrique, l'oxalate de sodium ferrique, le stéarate ferrique, le sulfate ferrique, l'acétate ferreux, le sulfate d'ammonium ferreux, le bromure ferreux, le gluconate ferreux, l'iodure ferreux, l'acétate ferrique, le fluoroborate ferrique, l'hydroxyde ferrique, l'oléate ferrique, le fumarate ferreux, l'oxyde ferreux, le lactate ferrique, le résinate ferrique, et l'une quelconque de leurs combinaisons ;
ledit système inhibiteur de corrosion étant présent en une quantité mineure efficace pour réduire la corrosivité dudit polyphosphate d'ammonium, sous forme concentrée, à une corrosivité maximale vis-à-vis de l'aluminium de 0,127 mm (5,0 mils) par an, telle que déterminée par le test "Uniform Corrosion" présenté dans la Section 4.5.6.1 de "Specification 5100-304b (janvier 2000) Superseding Specification 5100-00304a (février 1986)", intitulée "Specification for Long Term Retardant, Wildland Fire, Aircraft or Ground Application", émise par le Département de l'Agriculture des Etats-Unis, Service des Forêts.

11. Procédé selon la revendication 9 ou 10, dans lequel ledit système inhibiteur de corrosion comprend en outre un agent colorant choisi dans le groupe constitué par les agents colorants fugitifs, les pigments opacifiants, et les pigments fortement colorés.

12. Procédé selon l'une quelconque des revendications 9 à 11, dans lequel lesdits agents de mise en suspension sont choisis dans le groupe constitué par la terre à foulon, la montmorillonite, la sépiolite et l'argile kaolin.

13. Procédé selon l'une quelconque des revendications 9 à 12, dans lequel ledit biopolymère de xanthane est présent dans ladite composition pour inhiber la corrosion ou dans ladite composition ignifuge à une concentration de 1,0 % en poids à 5,0 % en poids.

14. Procédé selon l'une quelconque des revendications 9 à 13, dans lequel ladite composition ignifuge à pouvoir corrosif inhibé ou ladite composition d'extinction comprend de 2 % en poids à 3 % en poids de pyrophosphate ferrique.

15. Procédé selon l'une quelconque des revendications 9 à 14, dans lequel ladite composition ignifuge à pouvoir corrosif inhibé ou ladite composition d'extinction comprend de 1 % en poids à 2 % en poids d'oxyde de fer, de 2 % en poids à 3 % en poids de pyrophosphate ferrique, de 1 % en poids à 5 % en poids de biopolymère de xanthane, de 1 % en poids à 2 % en poids d'argile attapulgite, et de 0,01 % en poids à 1 % en poids de tolyltriazole.

16. Procédé selon l'une quelconque des revendications 9 à 15, dans lequel ledit système inhibant la corrosion est présent à raison de 0,01 % à 10,0 % en poids du total de ladite composition ignifuge à pouvoir corrosif inhibé ou de ladite composition d'extinction.
